# EUROPÄISCHE PATENTANMELDUNG

(11) **EP 4 588 985 A1**
(43) Veröffentlichungstag der Anmeldung: **23.07.2025**
(21) Anmeldenummer: 24216994.4
(22) Anmeldetag: 03.12.2024
(51) Int. Cl.: C09J 7/10

(54) **REAKTIVES KLEBEBAND**

(30) Priorität: 16.01.2024 DE 102024101149
(71) Anmelder: TESA SE, 22848 Norderstedt (DE)
(72) Erfinder: SCHUH, Dr. Christian, 22848 Norderstedt (DE); STREBL-PFARR, Maike Christine, 22848 Norderstedt (DE); SCHÜMANN, Dr. Uwe, 25421 Pinneberg (DE); HANNEMANN, Dr. Frank, 22848 Norderstedt (DE); SCHAFA, Tahmina, 22848 Norderstedt (DE)
(74) Vertreter: tesa SE

(57) **Zusammenfassung**

Die Erfindung betrifft ein reaktives Klebeband, und die Verwendung des Klebebands zur Verklebung von Bauteilen in elektronischen, optischen oder feinmechanischen Geräten, Automobilen, medizinischen Geräten und zahnmedizinischen Geräten.

Das reaktive Klebeband umfasst wenigstens eine reaktiv aushärtbare Klebemasseschicht enthaltend
a) ein oder mehrere Polymere, und
b) wenigstens eine erste radikalisch polymerisierbare (Meth)acrylat-Verbindung, und
c) wenigstens einen Initiator und/oder
d) wenigstens einen Redox-Katalysator,
und ist dadurch gekennzeichnet, dass die wenigstens eine erste radikalisch polymerisierbare (Meth)acrylat-Verbindung ein Monomer oder Oligomer mit mindestens einer stickstoffhaltigen Gruppe ausgewählt aus Amid, Urethan und Harnstoff ist und die wenigstens eine erste radikalisch polymerisierbare (Meth)acrylat-Verbindung einen Schmelzpunkt von größer als 45 °C und/oder ein Molekulargewicht von mehr als 300 g/mol aufweist.

## Beschreibung

Die Erfindung betrifft ein reaktives Klebeband und die Verwendung des Klebebands oder Klebeband-Systems zur Verklebung von Bauteilen in elektronischen Geräten, Automobilen, medizinischen Geräten und zahnmedizinischen Geräten.

Reaktive, insbesondere raumtemperaturhärtende, zum Beispiel auf der Polymerisation von Acrylatmonomeren basierende Haftklebebänder, werden seit einigen Jahren entwickelt und haben einen hohen Reifegrad erreicht.

Reaktiv aushärtbare Klebemassen und daraus hergestellte Klebebänder werden in einer Reihe von Schriften des Standes der Technik beschrieben. Hierbei wird eine reaktive Komponente - insbesondere auf Basis von Acrylmonomeren- in einen Polymer-Matrixfilm eingebracht, und zwar in Gegenwart von Substanzen, die nach Aktivierung die reaktive Aushärtung der Klebemasse bewirken, die aber im Lagerungszustand, also ohne Aktivierung, noch keine Reaktion auslösen. Die Reaktion - etwa eine Polymerisation beziehungsweise Härtung - der reaktiven Komponente kann durch äußere Einflüsse starten - wie etwa durch Wärme, Feuchtigkeit, Plasma, Strahlung und so weiter - oder etwa beispielswiese dadurch, dass zwei Schichten der vorgenannten Art, von denen einer einen Initiator und der andere einen Aktivator erhalten, miteinander in direkten Kontakt gebracht werden und der Initiator durch den Aktivator erst aktiviert wird. So erhält man ein Zwei-Komponenten-Klebesystem in Filmform.

Derartige Zweikomponentenklebesysteme auf Basis von Acrylmonomeren in Form haftklebriger Filme (Klebebändern) werden beispielsweise in WO 2014202402 A1, WO 2015062809 A1, WO 2018104053 A1 beschrieben.

Einkomponentige Klebstofffilme auf Basis von Acrylmonomeren gehören ebenfalls zum allgemein bekannten Stand der Technik. Diese werden üblicherweise mit Licht, insbesondere UV-Licht oder blauem Licht gehärtet.

Die DE 10 2021 125429 A1 offenbart beispielsweise einen Klebstofffilm der bzw. ein Haftklebeband das mindestens ein reaktives Acrylatmonomer, einen Initiator, einen Photoredox-Katalysator, (d) ein Polymer aus N-Vinylverbindungen und ein filmbildendes Polymer umfasst. Neben den Vorteilen des Polymers aus N-Vinylverbindungen hat sich aber gezeigt, dass insbesondere in Kontakt zu Medien wie beispielsweise Isopropanol-Wasser-Mischungen diese Klebstoffzusammensetzungen Schwächen zeigen.

Ein wesentliches Problem ist allerdings immer noch die Lagerstabilität der nicht ausgehärteten Klebebänder.

Der vorliegenden Erfindung liegt daher die Aufgabe zugrunde, ein reaktives Klebeband, umfassend wenigstens eine reaktiv aushärtbare Klebemasseschicht, bereitzustellen, welches eine verbesserte Lagerstabilität aufweist, und dabei insbesondere eine hohe Verklebungsfestigkeit nach dem Aushärten von zuvor unausgehärtet gelagerten Klebebändern erzielt wird.

Gleichzeitig soll die Verklebungsfestigkeit des Klebebandes vor der Lagerung nicht negativ beeinträchtigt sein.

Die vorstehend genannten Aufgaben gelten nicht nur für das Klebeband in Form eines Bandes auf Rolle. Stattdessen sollen auch kleinere Stanzlinge oder längliche Stanzlinge, die eine hohe Oberfläche aufweisen, eine gute Lagerungsstabilität sowie hohe Verklebungsfestigkeiten nach der Aushärtung aufweisen.

Die Aufgabe wird erfindungsgemäß durch das reaktive Klebeband gemäß Anspruch 1 gelöst.

Die Ausdrücke "reaktiv aushärtbares Klebeband" und "reaktives Klebeband" werden im Rahmen der vorliegenden Erfindung synonym verwendet. Dies gilt analog für eine Klebemasse und eine Klebemasseschicht.

Das erfindungsgemäße reaktive Klebeband umfasst wenigstens eine reaktiv aushärtbare Klebemasseschicht enthaltend
a) wenigstens ein Polymer, und
b) wenigstens eine erste radikalisch polymerisierbare (Meth)acrylat-Verbindung, und
c) wenigstens einen Initiator und/oder
d) wenigstens einen Redox-Katalysator,
und ist dadurch gekennzeichnet, dass die wenigstens eine erste radikalisch polymerisierbare (Meth)acrylat-Verbindung ein Monomer oder Oligomer mit mindestens einer stickstoffhaltigen Gruppe ausgewählt aus Amid, Urethan und Harnstoff ist und die wenigstens eine erste radikalisch polymerisierbare (Meth)acrylat-Verbindung einen Schmelzpunkt von größer als 45 °C und/oder ein Molekulargewicht von mehr als 300 g/mol aufweist.

Überraschenderweise hat sich herausgestellt, dass das erfindungsgemäße reaktive Klebeband nach erfolgter Aushärtung und Verklebung an Substrate eine hohe Verklebungsfestigkeit auch nach Lagerung der noch unausgehärteten Stanzlinge aufweist.

Dabei hat sich überraschenderweise herausgestellt, dass auch kleinere Stanzlinge und Stanzteile mit länglichen, feinen Strukturen (Stegbreiten kleiner als 1 cm) und damit vergleichsweise hoher Oberfläche bei geringer Klebefläche mit verbesserter Lagerungsstabilität und weiterhin hohen Klebkräften und/oder Verklebungsfestigkeiten erhalten werden können.

Ohne an eine Theorie gebunden sein zu wollen, scheinen "kleinere" Moleküle, wenn sie in einer Klebmasse gelöst vorliegen (und nicht mehr im kristallinen Zustand) leicht zu verdampfen. Die Erfinder haben festgestellt, dass erst dann eine ausreichende Lagerfähigkeit gegeben ist, wenn die wenigstens eine erste radikalisch polymerisierbare (Meth)acrylat-Verbindung bzw. das Monomer oder Oligomer eine gewisse Größe - repräsentiert durch das Molekulargewicht M bzw. das Gewichtsmittel der Molekulargewichtsverteilung M_{w} - hat oder der Schmelzpunkt weit genug von Raumtemperatur entfernt ist oder beides gegeben ist.

Insbesondere hat sich überraschenderweise herausgestellt, dass die verbesserte Lagerungsstabilität auch mit anderen Polymeren als Acrylaten in der filmbildenden Matrix erzielt werden kann.

Damit ist die Erfindung für eine Vielzahl von Einsatzgebieten geeignet und entsprechend anwendbar.

Die erfindungsgemäßen Klebebänder eignen sich insbesondere für miniaturisierte Anwendungen, wie sie beispielsweise in der Elektronikindustrie gefordert sind. Hier kommt es immer mehr darauf an, die Verbindungen zwischen den Bauteilen sehr präzise und platzsparend zu realisieren.

Das erfindungsgemäße reaktive Klebeband ist bevorzugt ein doppelseitiges Klebeband. Der Einfachheit halber wird das erfindungsgemäße Klebeband im Rahmen der vorliegenden Erfindung auch in den doppelseitigen Ausführungsformen als "Klebeband" bezeichnet.

Die vorliegende Erfindung betrifft ein Klebeband, welches in beliebigen Konfektionsformen vorliegen kann, wobei Klebebandrollen bevorzugt sind. Das Klebeband, insbesondere in Bahnform, kann entweder in Form einer Rolle, also in Form einer archimedischen Spirale auf sich selbst aufgerollt, hergestellt werden oder als Klebestreifen, wie er zum Beispiel in Form von Zuschnitten oder Stanzlingen erhalten wird.

Das erfindungsgemäße Klebeband liegt vor dem Zuschneiden oder Stanzen insbesondere in Bahnform vor. Unter einer Bahn wird ein Objekt verstanden, dessen Länge (Erstreckung in x-Richtung) um ein Vielfaches größer ist als seine Breite (Erstreckung in y-Richtung) und die Breite entlang der gesamten Länge in etwa vorzugsweise genau gleichbleibend ausgebildet ist.

Der allgemeine Ausdruck "Klebeband", synonym auch "Klebestreifen" oder "Klebefilm" genannt, umfasst im Sinne dieser Erfindung alle flächigen Gebilde, wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.

Gemäß vorteilhafter Ausführungsformen der Erfindung liegt das Klebeband als schmales Klebeband mit einer Breite von weniger als 1 cm, insbesondere 200 µm bis 1 cm, oder als Stanzling mit einer Stegbreite von weniger als 1 cm, insbesondere 200 µm bis 1 cm, vor. Hierbei kommt wie oben ausgeführt der erfindungsgemäße erzielte Vorteil der verbesserten Lagerungsstabilität besonders gut zum Tragen.

Das Klebeband weist neben der Längsausdehnung (x-Richtung) und Breitenausdehnung (y-Richtung) auch eine senkrecht zu beiden Ausdehnungen verlaufende Dicke (z-Richtung) auf, wobei die Breitenausdehnung und Längsausdehnung um ein Vielfaches größer sind als die Dicke. Die Dicke ist über die gesamte durch Länge und Breite bestimmte Flächenausdehnung der Klebebänder möglichst gleich, vorzugsweise innerhalb von Toleranzen exakt gleich.

Es versteht sich, dass die einzelnen Schichten entlang der z-Richtung aufeinander angeordnet sind.

Sämtliche Ausführungen der Beschreibung gelten für das erfindungsgemäße reaktive Klebeband, das erfindungsgemäße reaktive Klebeband-System, das erfindungsgemäße Verfahren zur Herstellung des Klebebandes, das erfindungsgemäße Verfahren zur Herstellung des Klebeband-Systems, den erfindungsgemäßen verklebten Verbund, das erfindungsgemäße Verfahren zum Herstellen des verklebten Verbundes und die Verwendung des erfindungsgemäßen Klebebandes oder Klebeband-Systems.

Von der Erfindung sind zudem sämtliche Merkmale, die Gegenstände von jeglichen abhängigen Patentansprüchen sind, umfasst. Ferner sind von der Erfindung Kombinationen einzelner Merkmale miteinander und hierbei auch unterschiedlicher Bevorzugungsstufen umfasst. Somit ist von der Erfindung beispielsweise die Kombination eines ersten als "bevorzugt" gekennzeichneten Merkmals mit einem zweiten als "besonders bevorzugt" gekennzeichneten Merkmals umfasst. Hierbei sind auch im Rahmen von "Ausführungsformen" bezeichnete Gegenstände ebenfalls unterschiedlicher Bevorzugungsstufen mit umfasst.

Im Folgenden wird die Klebemasse der reaktiv aushärtbaren Klebemasseschicht näher ausgeführt.

Die Masse der Klebemasseschicht ist eine reaktiv aushärtbare Klebemasse.

Unter einer "reaktiv aushärtbaren Klebemasse" ist im Rahmen der vorliegenden Erfindung eine Klebemasse zu verstehen, die durch chemische Reaktion wenigstens eines enthaltenen entsprechend reaktiven Bestandteils aushärtet und hierbei die Klebeverbindung erzeugt.

Im Rahmen der vorliegenden Erfindung werden derartige Klebemassen auch als "Reaktivklebemassen" bezeichnet.

Bevorzugt fungieren die erfindungsgemäßen reaktive aushärtbaren Klebebänder bzw. die entsprechenden Reaktivklebemassen nach der Härtung als Strukturklebstoff oder semistrukturelle Klebstoffe. Nach DIN EN 923: 2006-01 sind Strukturklebstoffe Klebstoffe, die Klebverbindungen bilden, die in einem Gefüge für eine vorgegebene längere Zeitspanne eine festgelegte Festigkeit beibehalten können (nach ASTM-Definition: "bonding agents used for transferring required loads between adherends exposed to service environments typical for the structure involved"). Es sind also Klebstoffe für chemisch und physikalisch hoch beanspruchbare Klebungen, die im ausgehärteten Zustand zur Verfestigung der Klebebänder beitragen.

Der Begriff "(semi-)struktureller Klebstoff" oder "(semi-)strukturelle Klebstoffe" umfasst die "semi-strukturellen Klebstoffe" und die "strukturellen Klebstoffe". "Semi-strukturelle Klebstoffe" sind solche gehärteten Klebstoffe, die im Zugschertest eine Zugscherfestigkeit von mindestens 1,0 MPa und bevorzugter mindestens etwa 1,5 MPa (jeweils auf Stahl) aufweisen. Als "strukturelle Klebstoffe" oder "Strukturklebstoffe" werden solche ausgehärteten Klebstoffe bezeichnet, die eine besonders hohe Zugscherfestigkeit aufweisen und die im Zugschertest eine Zugscherfestigkeit von mindestens 5 MPa, bevorzugter von mindestens 7 MPa und besonders bevorzugt von mindestens 10 MPa (jeweils auf Stahl) aufweisen.

Wie eingangs ausgeführt erfolgt die chemische Reaktion nach einer Aktivierung, wie etwa durch Wärme, Feuchtigkeit, Plasma, Strahlung oder durch Inkontaktbringen zweier Klebemasseschichten, die geeignete Reaktanden enthalten.

Bevorzugt sind im Rahmen der vorliegenden Erfindung reaktiv aushärtbare Klebebänder, bei denen die Aushärtung durch Aktivierung mittels Strahlung, insbesondere mittels Lichts einer Wellenlänge im sichtbaren Bereich des elektromagnetischen Spektrums oder mittels UV-Licht, oder durch Aktivierung mittels Inkontaktbringen mit einer weiteren reaktiv aushärtbaren Klebemasseschicht bzw. einem entsprechenden reaktiv aushärtbaren Klebeband erfolgt.

Die Klebemasse der reaktiv aushärtbaren Klebemasseschicht D enthält wenigstens
a) wenigstens ein Polymer, und
b) wenigstens eine erste radikalisch polymerisierbare (Meth)acrylat-Verbindung, und
c) wenigstens einen Initiator und/oder
d) wenigstens einen Redox-Katalysator,
wobei die wenigstens eine erste radikalisch polymerisierbare (Meth)acrylat-Verbindung ein Monomer oder Oligomer mit mindestens einer stickstoffhaltigen Gruppe ausgewählt aus Amid, Urethan und Harnstoff ist und die wenigstens eine erste radikalisch polymerisierbare (Meth)acrylat-Verbindung einen Schmelzpunkt von größer als 45 °C und/oder ein Molekulargewicht von mehr als 300 g/mol aufweist.

Die Gesamtmasse der Bestandteile der Klebemasse ergibt in Summe 100 Gewichtsprozent (Gew.-%).

Die Mengenangaben der Bestandteile a) bis d) in Gewichtsprozent beziehen sich jeweils auf das Gesamtgewicht der Klebemasse.

Ferner wird die Menge an eventuell enthaltenen Additiven, wie unten beschrieben, ebenfalls zu den 100 Gewichtsprozent der Klebemasse gezählt.

Gegebenenfalls weitere optional vorliegende Bestandteile, wie Lösemittel beziehungsweise Wasser, dienen nur der Herstellung und werden in dieser Betrachtung nicht zum Gesamtgewicht der Bestandteile der Klebemasse gezählt. Das gilt auch für Lösemittel, die gegebenenfalls in den kommerziell erhältlichen Rohstoffen bereits enthalten sind.

### a) Polymer

Die reaktive Klebemasse enthält wenigstens ein Polymer.

Es können ein (einziges) Polymer oder mehrere Polymere enthalten sein. Die Beschreibung des "Polymers" also in seiner Bedeutung ebenso wie der Ausdruck "Gesamtmenge" sowohl das Vorliegen eines einzigen Polymers als auch das Vorliegen mehrerer Polymere ein. Die Bezeichnungen "wenigstens ein" bzw. "ein oder mehrere" oder auch "genau ein" beziehen sich hierin in branchenüblicher Weise auf die chemische Natur der entsprechenden Verbindungen und nicht auf deren Stoffmenge.

Die Klebemasse umfasst bevorzugt 10 Gew.-% bis 70 Gew.-% mindestens eines Polymers a), besonders bevorzugt umfasst die Klebemasse 25 Gew.-% bis 62 Gew.-%, wiederum bevorzugt 30 bis 62 Gew.-%, und gemäß beispielhafter Ausführungsformen bevorzugt 40 Gew.-% bis 60 Gew.-%, mindestens eines Polymers a), jeweils bezogen auf die Gesamtmasse der Basismasse.

Die Gewichtsprozentangaben (Gew.-%) beziehen sich auf ein Polymer oder auf die Summe aller Polymere, falls zwei oder mehr Polymere vorliegen.

Wie bereits ausgeführt ist es mit der Erfindung überraschenderweise gelungen unterschiedliche Klebebänder enthaltend jeweils verschiedene Polymere als Filmbildner bereitzustellen.

Gemäß bevorzugter Ausführungsformen der Erfindung ist das Polymer ausgewählt ist aus der Gruppe bestehend aus Ethylen-Vinylacetat-Copolymeren (EVA), Poly(meth)acrylaten, Polyurethanen (PU), Polyvinylacetaten (PVA), Polyvinylalkoholen, Polyvinylacetalen, wie insbesondere Polyvinylbutyral (PVB), Polyestern und Polymeren aus Monomeren umfassend N-Vinylverbindungen.

Besonders bevorzugt ist das ausgewählt aus der Gruppe bestehend aus Ethylen-Vinylacetat-Copolymeren (EVA), Polyvinylacetaten (PVA), Poly(meth)acrylaten, Poly(N-Vinylcaprolactam), Poly(N-Vinylpyrrolidon) und Polyurethanen (PU).

Gemäß besonders bevorzugter Ausführungsformen enthält die Klebemasse wenigstens ein Poly(meth)acrylat. Bevorzugt enthält die Basismasse dabei 10 Gew.-% bis 70 Gew.-%, besonders bevorzugt 25 Gew.-% bis 62 Gew.-%, insbesondere bevorzugt 30 Gew.-% bis 62 Gew.-%, an Poly(meth)acrylat.

Unter einem "Poly(meth)acrylat" wird ein Polymer verstanden, welches durch Polymerisation, beispielsweise radikalische Polymerisation, von Acryl- und/oder Methacrylmonomeren sowie gegebenenfalls weiteren, copolymerisierbaren Monomeren erhältlich ist. Insbesondere wird unter einem "Poly(meth)acrylat" ein Polymer verstanden, dessen Monomerbasis zu mindestens 50 Gew.-% aus Acrylsäure, Methacrylsäure, Acrylsäureestern und/oder Methacrylsäureestern besteht, wobei Acrylsäureester und/oder Methacrylsäureester zumindest anteilig, bevorzugt zu mindestens 30 Gew.-%, bezogen auf die gesamte Monomerbasis des betreffenden Polymers, enthalten sind.

Die Klebemasse enthält bevorzugt wenigstens ein Poly(meth)acrylat, sie kann also ein oder mehrere Poly(meth)acrylate enthalten. Die Bezeichnungen "wenigstens ein" bzw. "ein oder mehrere" oder auch "genau ein" beziehen sich hierin in branchenüblicher Weise auf die chemische Natur der entsprechenden Verbindungen und nicht auf deren Stoffmenge. Dies gilt ebenso für die Monomerzusammensetzung des Poly(meth)acrylats.

Beispielsweise kann die Monomerzusammensetzung als Monomer ausschließlich n-Butylacrylat umfassen, was bedeuten würde, dass die Monomerzusammensetzung eine Vielzahl von n-Butylacrylat-Molekülen umfasst.

Bei dem oder den Poly(meth)acrylat(en) kann es sich prinzipiell um jegliche Poly(meth)acrylate handeln.

Gemäß bevorzugter Ausführungsformen der Erfindung sind die enthaltenen Poly(meth)acrylate durch Polymerisation einer Monomerzusammensetzung herstellbar, die ein oder mehrere Monomere enthält, die ausgewählt sind aus der Gruppe bestehend aus Ethylacrylat, n-Butylacrylat, iso-Butylacrylat, tert-Butylacrylat, iso-Amylacrylat, n-Hexylacrylat, 2-Heptylacrylat, n-Heptylacrylat, 2-Ethylhexylacrylat, 2-Octylacrylat, n-Octylacrylat, iso-Octylacrylat, n-Nonylacrylat, iso-Nonylacrylat, n-Decylacrylat, iso-Decylacrylat, 2-[[(Butylamino)carbonyl]oxy]ethylacrylat, 2-Cyanoethylacrylat, 2-(2-Ethoxyethoxy)ethylacrylat, 2-Phenoxyethylacrylat, iso-Stearylacrylat, Docosylacrylat, 2-[2-(2-Methoxyethoxy)-ethoxy]ethylacrylat, Isobornylacrylat, Norbornylacrylat, Benzylacrylat, 3,3,5-Trimethylcyclohexylacrylat, Cyclohexylacrylat, 1-Acryloyloxy-3-hydroxyadamantan, 4-[(6-Acryloyloxy)hexyloxy]4'-cyanobiphenyl, N-Succinimidylacrylat, 1-Ethylcyclopentylacrylat, N-tert-Octylacrylamid, N-tert-Butylacrylamid, Dimethylacrylamid, Diethylacrylamid, N-iso-Propylacrylamid, N-Hydroxyethylacrylamid, Acrylamid, 2-Acrylamido-2-methylpropansulfonsäure, N-[3-(Dimethylamino)propyl]acrylamid, Diacetonacrylamid, N-(Butoxymethyl)acrylamid, N-Phenylacrylamid, N-[2-(Dimethylamino)ethyl]acrylamid, N-[2-(Diethylamino)ethyl]acrylamid, Methylmethacrylat, Ethylmethacrylat, Cyclohexylmethacrylat, Benzylmethacrylat, Isobornylmethacrylat, Glycerolformalmethacrylat, 2-Dimethylaminoethylmethacrylat, Phenoxyethylmethacrylat, 9-Anthrylmethylmethacrylat, 2-Ethyl-2-adamantylmethacrylat, 2-(Acetoacetyloxy)ethylmethacrylat, 2-Isopropyl-2-methacryloyloxyadamantan, iso-Propylmethacrylat, iso-Butylmethacrylat, tert-Butylmethacrylat, Furfurylmethacrylat, 2-Methacryloyloxy-2-methyladamantan, 2-Morpholinoethylmethacrylat, Phenylmethacrylat, N-Succinimidylmethacrylat, 2-(tert-Butylamino)ethylmethacrylat, 2-Cyclohexylpropan-2-yl-methacrylat, 1-Adamantylmethacrylat, 1-Methylcyclopentylmethacrylat, N-tert-Butylmethacrylamid, N-(Methoxymethyl)methacrylamid, N,N-Dimethylmethacrylamid, Methacrylamid, N-Phenylmethacrylamid, N,N-Dimethylmethacrylamid, N-iso-Propylmethacrylamid, N-Vinylformamid, N-Vinylpyrrolidon, N-Vinylcaprolactam, N-Vinylcarbazol, N-Vinylimidazol, Vinylmethyloxazolidinon, N-Vinyl-N-methylacetamid, Hydroxyethylacrylat, Hydroxypropylacrylat, 4-Hydroxybutylacrylat, 2-Hydroxy-3-phenoxypropylacrylate, Hydroxyethylmethacrylat, Hydroxypropylmethacrylat, 4-Hydroxybutylmethacrylat, 2-Hydroxy-3-phenoxypropylmethacrylat, 4-Hydrxyethylacrylamid, Acrylsäure, Methacrylsäure, 2-Acryloyloxyethylsuccinat, Methacryloxyethylsuccinat, Sulfoethylmethacrylat, Methacrylamid, Glycidylacrylat, Glycidylmethacrylat, 3,4-Epoxycyclohexylmethylacrylat, 3,4-Epoxycyclohexylmethylmethacrylat, 4-Hydroxybutylacrylateglycidylether, 4-Hydroxybutylmethacrylateglycidylether, Isocyanatoethylacrylat, Isocyanatoethylmethacrylat, 2-[2-(Methacryloyloxy)ethyloxy]ethylisocyanat, 2-[2-(Acryloyloxy)ethyloxy]ethylisocyanat und α,α -Dimethyl-m-Isopropenylbenzylisocyanat.

Gemäß bevorzugter Ausführungsformen sind die enthaltenen Poly(meth)acrylate durch Polymerisation einer Monomerzusammensetzung herstellbar, die als Monomere 2-Phenoxyethylacrylat (PEA) oder Benzyl(meth)acrylat und Methylmethacrylat (MMA) enthält.

Gemäß bevorzugter Ausführungsformen ist wenigstens ein Poly(meth)acrylat enthalten, welches durch Polymerisation einer Monomerzusammensetzung herstellbar, die mindestens 15 Gew.-%, bevorzugt mindestens Gew.-30 %, an Monomeren mit einem aromatischen Rest aufweist.

Der aromatische Rest der Gruppen AR ist bevorzugt ausgewählt aus der Gruppe bestehend aus Phenyl-Gruppen, Phenylen-Gruppen, Benzyl-Gruppen, Naphthyl-Gruppen und Naphthylen-Gruppen, die optional Substituenten tragen können. Besonders bevorzugt ist der aromatische Rest AR ausgewählt aus der Gruppe bestehend aus Phenyl-Gruppen, Phenylen-Gruppen, Naphthyl-Gruppen und Naphthylen-Gruppen, wobei Phenyl-Gruppen oder Phenylen-Gruppen ganz besonders bevorzugt sind.

Unter einer "Phenylen-Gruppe" wird in Übereinstimmung mit dem fachmännischen Verständnis eine Phenyl-Gruppe verstanden, die wenigstens zweifach gebunden ist.

Dies gilt analog für Naphthylen.

Insbesondere sind die Monomere mit einem aromatischen Rest ausgewählt aus der Gruppe bestehend aus Benzylacrylat, Phenylacrylat, 2-Phenylethylacrylat, 3-Phenylpropylacrylat, 4-Phenylbutylacrylat, 5-Phenylpentylacrylat, 6-Phenylhexylacrylat, Benzylmethylacrylat, Phenylmethacrylat, 2-Phenylethylmethacrylat, 3-Phenylpropylmethacrylat, 4-Phenylbutylmethacrylat, 5-Phenylpentylmethacrylat, 6-Phenylhexylmethacrylat, 2-Phenoxyethylacrylat, 2-Phenoxydiethyleneglycolacrylat, 2-Phenoxytriethyleneglycolacrylat, 2-Phenoxytetraethyleneglycolacrylat, 2-Phenoxypentaethyleneglycolacrylat, 2-phenoxyhexaethyleneglycolacrylat, 2-Phenoxyheptaethyleneglycolacrylat, 2-Phenoxyoctaethyleneglycolacrylat, 2-Phenoxynonaethyleneglycolacrylat, 2-Phenoxydecaethyleneglycolacrylat, 2-Phenoxyethylmethacrylat, 2-Phenoxydiethyleneglycolmethacrylat, 2-Phenoxytriethyleneglycolmethacrylat, 2-Phenoxytetraethyleneglycolmethacrylat, 2-Phenoxypentaethyleneglycolmethacrylat, 2-Phenoxyhexaethyleneglycolmethacrylat, 2-Phenoxyheptaethyleneglycolmethacrylat, 2-Phenoxyoctaethyleneglycolmethacrylat, 2-Phenoxynonaethyleneglycolmethacrylat, 2-Phenoxydecaethyleneglycolmethacrylat, 4-tert.-Butylphenylacrylat, 4-tert.-Butylphenylmethacrylat, 2-(4-tert.-Butyl)phenoxyethylacrylat, 2-(4-tert.-Butyl)phenoxydiethyleneglycolacrylat, 2-(4-tert.-Butyl)phenoxytriethyleneglycolacrylat, 2-(4-tert.-Butyl)phenoxytetraethyleneglycolacrylat, 2-(4-tert.-Butyl)phenoxypentaethyleneglycolacrylat, 2-(4-tert.-Butyl)phenoxyhexaethyleneglycolacrylat, 2-(4-tert.-Butyl)phenoxyheptaethyleneglycolacrylat, 2-(4-tert.-Butyl)phenoxyoctaethyleneglycolacrylat, 2-(4-tert.-Butyl)phenoxynonaethyleneglycolacrylat, 2-(4-tert.-Butyl)phenoxydecaethyleneglycolacrylat, 2-(4-tert.-Butyl)phenoxyethylmethacrylat, 2-(4-tert.-Butyl)phenoxydiethyleneglycolmethacrylat, 2-(4-tert.-Butyl)phenoxytriethyleneglycolmethacrylat, 2-(4-tert.-Butyl)phenoxytetraethyleneglycolmethacrylat, 2-(4-tert.-Butyl)phenoxypentaethyleneglycolmethacrylat, 2-(4-tert.-Butyl)phenoxyhexaethyleneglycolmethacrylat, 2-(4-tert.-Butyl)phenoxyheptaethyleneglycolmethacrylat, 2-(4-tert.-Butyl)phenoxyoctaethyleneglycolmethacrylat, 2-(4-tert.-Butyl)phenoxynonaethyleneglycolmethacrylat, 2-(4-tert.-Butyl)phenoxydecaethyleneglycolmethacrylat.

Besonders bevorzugt sind die Monomere mit einem aromatischen Rest ausgewählt aus der Gruppe bestehend aus Benzylacrylat, Phenylacrylat, Benzylmethacrylat, Phenylmethacrylat, 2-Phenoxyethylacrylat, 2-Phenoxyethylmethacrylat. Äußerst bevorzugt sind die Monomere ausgewählt aus Benzylacrylat und Benzylmethacrylat.

Gemäß weiterer besonders bevorzugter Ausführungsformen enthält die Klebemasse wenigstens ein Polyurethan. Bevorzugt enthält die Basismasse dabei 10 Gew.-% bis 60 Gew.-%, besonders bevorzugt 25 Gew.-% bis 60 Gew.-%, insbesondere bevorzugt 50 Gew.-% bis 60 Gew.-%, an Polyurethan.

Bevorzugt sind thermoplastische Polyurethane mit einer kristallinen Schmelztemperatur von kleiner als 100 °C und/oder einer Erweichungstemperatur von kleiner als 100 °C. In diesem Zusammenhang steht der Begriff Erweichungstemperatur für die Temperatur, ab der das thermoplastische Granulat mit sich selbst verklebt. Wenn es sich bei dem Polymer um ein semikristallines thermoplastisches Polymer handelt, dann weist es neben seiner Erweichungstemperatur (die mit dem Schmelzen der Kristallite zusammenhängt) sehr bevorzugt eine Glasübergangstemperatur von höchstens 25 °C, bevorzugt höchstens 0 °C, auf.

Gemäß bevorzugter Ausführungsformen wird wenigstens ein thermoplastisches Polyurethan eingesetzt. Kommerziell erhältliche thermoplastisches Polyurethane sind zum Beispiel Desmocoll^{®} 530/1 und Desmocoll^{®} 540/3 sowie Desmomelt^{®} 530 von Covestro AG (Leverkusen, Deutschland) oder IROSTIC^{®} S-6558-06 und IROSTIC^{®} S 8612 von Huntsman (Huntsman Holland B.V., Botlek-Rotterdam, Niederlande) oder alternative Varianten aus diesen Produktlinien. Außerdem gibt es die Produktlinien Elastollan^{®} von BASF (Ludwigshafen, Deutschland) oder Pearlbond von Lubrizol (Lubrizol Advanced Materials Europe BVBA, Brüssel, Belgien).

Vorzugsweise besitzt das thermoplastische Polyurethan eine Erweichungstemperatur von kleiner als 100 °C, insbesondere kleiner als 80 °C. Bevorzugte Beispiele für solche thermoplastische Polyurethane sind Desmomelt^{®} 530 und IROSTIC^{®} S-6558-06. Desmomelt^{®} 530 ist ein hydroxy-terminiertes, weitgehend lineares, thermoplastisches, stark kristallisierendes Polyurethan-Elastomer. IROSTIC^{®} S-6558-06 ist laut Herstellerangabe ein lineares thermoplastisches Polyurethan für lösungsmittelbasierte Klebstoffe. Die Merkmale sind laut Herstellerangabe: sehr geringe Kristallisationsrate, lange offene Zeit, sehr niedrige Aktivierungstemperatur.

Gemäß weiterer besonders bevorzugter Ausführungsformen enthält die Klebemasse wenigstens ein Polyvinylacetat.

Bevorzugt enthält die Klebemasse dabei 5 Gew.-% bis 65 Gew.-%, besonders bevorzugt 25 Gew.-% bis 62 Gew.-%, insbesondere bevorzugt 50 Gew.-% bis 62 Gew.-%, an Polyvinylacetaten.

Gemäß weiterer besonders bevorzugter Ausführungsformen enthält die Klebemasse wenigstens ein Ethylen-Vinylacetat-Copolymer.

Bevorzugt enthält die Klebemasse dabei 5 Gew.-% bis 60 Gew.-%, besonders bevorzugt 25 Gew.-% bis 50 Gew.-%, insbesondere bevorzugt 30 Gew.-% bis 50 Gew.-%, an Ethylen-Vinylacetat-Copolymeren.

Gemäß bevorzugter Ausführungsformen weist das wenigstens eine Ethylen-Vinylacetat-Copolymer einen Vinylacetatanteil von 60 bis 100 % auf. Ein geeignetes Ethylen-Vinylacetat-Copolymer ist beispielsweise unter dem Handelsnamen Levamelt^{®} 700 von der Firma Arlanxeo erhältlich.

Gemäß bevorzugter Ausführungsformen der Erfindung ist das Polymer, insbesondere und beispielsweise Poly(meth)acrylat, der Reaktivklebmasse im erfindungsgemäßen reaktiven Klebeband gegenüber der wenigstens einen ersten radikalisch polymerisierbaren (Meth)acrylat-Verbindung sowie ggf. weiteren enthaltenen radikalisch polymerisierbaren (Meth)acrylat-Verbindungen und dem Initiatorsystem sowie den gegebenenfalls übrigen Stoffen im Wesentlichen inert. Inert bedeutet in diesem Zusammenhang, dass die radikalisch polymerisierbaren (Meth)acrylat-Verbindungen und das Initiatorsystem und die ggf. übrigen Stoffe vor der Lichthärtung unter geeignet gewählten Bedingungen, insbesondere bei Raumtemperatur (23 °C), im Wesentlichen nicht mit dem Polymer reagieren.

Aus diesem Grund sind in einer bevorzugten Ausführungsform keine Säure, insbesondere keine Acrylsäure oder andere Monomere mit einer oder mehreren Carboxylgruppen, und keine Amine, insbesondere keine tertären Amine, als Comonomer(e) in der Monomerzusammensetzung des Polymers bzw. Poly(meth)acrylats enthalten.

Das oder die enthaltenen Polymere weisen bevorzugt keine primäre, sekundäre oder tertiäre Aminogruppe auf.

In einer speziellen Ausführungsform ist das Poly(meth)acrylat bzw. die Poly(meth)acrylate zusätzlich auch nach der Aktivierung der Härtungsreaktion inert. Dies bedeutet, dass in der radikalischen Reaktion das Poly(meth)acrylat nicht mit reagiert.

### b) radikalisch polymerisierbare (Meth)acrylat-Verbindung

Die Reaktivklebemasse des erfindungsgemäßen reaktiven Klebebandes umfasst wenigstens eine erste radikalisch polymerisierbare (Meth)acrylat-Verbindung b), wobei die wenigstens eine erste radikalisch polymerisierbare (Meth)acrylat-Verbindung ein Monomer oder Oligomer mit mindestens einer stickstoffhaltigen Gruppe ausgewählt aus Amid, Urethan und Harnstoff ist.

Ferner weist die wenigstens eine erste radikalisch polymerisierbare (Meth)acrylat-Verbindung einen Schmelzpunkt von größer als 45 °C und/oder ein Molekulargewicht von mehr als 300 g/mol auf.

Gemäß einer ersten Alternative weist die wenigstens eine erste radikalisch polymerisierbare (Meth)acrylat-Verbindung somit einen Schmelzpunkt von größer als 45 °C, bevorzugt von mindestes 50 °C, und besonders bevorzugt von mindestens 55 °C, auf.

Der Schmelzpunkt wird gemäß der im Methodenteil aufgeführten Methode bestimmt.

Gemäß einer zweiten Alternative weist die wenigstens eine erste radikalisch polymerisierbare (Meth)acrylat-Verbindung ein Molekulargewicht von mehr als 300 g/mol, bevorzugt von mehr als 400 g/mol, ganz besonders bevorzugt von mehr als 500 g/mol, auf.

Von der Erfindung umfasst ist in einer dritten Alternative auch, dass die wenigstens eine erste radikalisch polymerisierbare (Meth)acrylat-Verbindung einen Schmelzpunkt von größer als 45 °C und ein Molekulargewicht von mehr als 300 g/mol aufweist, wobei auch hier jeweils die Bevorzugungsstufen für M bzw. M_{w} und den Schmelzpunkt unabhängig voneinander gelten. Im Fall von radikalisch polymerisierbare (Meth)acrylat-Verbindungen, die als Oligomeren-Gemisch vorliegen bzw. generell als Gemisch unterschiedlicher Moleküle mit unterschiedlichem Molekulargewicht vorliegen ersetzt das Gewichtsmittel der Molekulargewichtsverteilung M_{w} das Molekulargewicht M.

Für den Fall, dass ein derartiges Oligomeren-Gemisch verwendet wird und insbesondere der Schmelzpunkt 45 °C oder weniger beträgt, enthält das Gemisch bevorzugt kein Molekül, welches ein Molekulargewicht von 300 g/mol oder weniger aufweist, wobei Lösungsmittel oder sonstige Begleitsubstanzen hierbei nicht betrachtet werden. Entscheidend ist, dass in einem solchen Gemisch bevorzugt keine erste - im Rahmen der vorliegenden Erfindung stickstoffhaltige- radikalisch polymerisierbare (Meth)acrylat-Verbindung mit einem Molekulargewicht von 300 g/mol oder weniger vorliegt oder
zumindest 95 Gew.-% - bezogen auf das Gesamtgewicht des Oligomerengemisches - der radikalisch polymerisierbaren (Meth)acrylat-Verbindungen in einem solchen Gemisch ein Molekulargewicht von mehr als 300 g/mol aufweisen.

Die Obergrenze für das Molekulargewicht der wenigstens einen ersten radikalisch polymerisierbaren (Meth)acrylat-Verbindung liegt bevorzugt bei 35000 g/mol und beträgt insbesondere weniger als 15000 g/mol, insbesondere weniger als 10000 g/mol.

Es hat sich herausgestellt, dass nur dann eine ausreichende Lagerungsstabilität erzielt wird, wenn wenigstens eine der vorstehend genannten Bedingungen - Schmelzpunkt oder untere Grenze für das Molekulargewicht der ersten stickstoffhaltigen radikalisch polymerisierbare (Meth)acrylat-Verbindung gegeben ist.

Die mindestens eine stickstoffhaltige Gruppe ist bevorzugt ausgewählt aus Amid- und UrethanGruppen. Besonders bevorzugt ist die stickstoffhaltige Gruppe eine Urethan-Gruppe.

Amine sind nicht in der Auswahl der stickstoffhaltigen Gruppe umfasst.

Damit weist die wenigstens eine erste radikalisch polymerisierbare (Meth)acrylat-Verbindung bevorzugt keine Amin-Gruppe auf. Dies gilt für primäre, sekundäre und tertiäre Amine.

In Übereinstimmung mit dem fachmännischen Verständnis soll die wenigstens eine erste radikalisch polymerisierbare (Meth)acrylat-Verbindung bzw. das Monomer oder Oligomer für ein Monomer oder Oligomer stehen, das zu einer Radikalkettenpolymerisation in der Lage ist. Ein geeignetes radikalisch polymerisierbares Monomer oder Oligomer ist ausgewählt aus der Gruppe bestehend aus Acrylsäureestern, Methacrylsäureestern sowie vernetzenden radikalisch polymerisierbaren Monomeren wie Diacrylaten, Dimethacrylaten, Triacrylaten, Trimethacrylaten und höher funktionellen Acrylaten bzw. höher funktionellen Methacrylaten, wobei die Verbindungen entsprechend erfindungsgemäß mit wenigstens einer stickstoffhaltigen Gruppe funktionalisiert sind.

Unter radikalisch polymerisierbaren Oligomeren versteht der Fachmann, insbesondere in Abgrenzung zu Polymeren, insbesondere radikalisch polymerisierbare Verbindungen mit einem Gewichtsmittel der Molekulargewichtsverteilung M_{w} von weniger als 35000 g/mol, insbesondere weniger als 15000 g/mol, insbesondere weniger als 10000 g/mol, und dabei im Rahmen der vorliegenden Erfindung insbesondere sogenannte Urethanacrylate enthaltend Ether-Oligomere, Butadien-Oligomere, Ester-Oligomere, Carbonat-Oligomere, Silikon-Oligomere, mit einem Gewichtsmittel der Molekulargewichtsverteilung M_{w} von weniger als 35000 g/mol, insbesondere weniger als 15000 g/mol, insbesondere weniger als 10000 g/mol, wobei die Oligomere zudem jeweils wie erfindungsgemäß gefordert wenigstens eine stickstoffhaltige Gruppe aufweisen.

Dies sind unter anderem, aliphatische, aromatische und Silikon-Urethan-(Meth)acrylate, aliphatische und aromatische Polyester-(Meth)acrylate, Polybutadien-(Meth)acrylate, dendritische (Meth)acrylate, Polyether-(Meth)acrylate und Polycarbonat-(Meth)acrylate erhältlich zum Beispiel von Miwon und Bomar, wie beispielsweise MIRAMER SC2565 mit einem Mw von 5200 g/mol von der Firma Miwon, oder Oligomere auf Basis von aliphatischen Polyurethanen insbesondere auf Basis von Polyester-Polyurethanen, wie beispielsweise die unter den Handelsnamen EBECRYL^{®} 8402, EBECRYL^{®} 4858 oder EBECRYL^{®} 8809 erhältlichen aliphatischen Urethandiacrylate, oder acrylierte Oligoester zum Beispiel auf Basis von Caprolactonen, wie das kommerziell erhältliche Hydroxyethylcaprolactonacrylat (HECLA; CAS-Nr.: 110489-05-9).

Bevorzugt ist die Funktionalität der polymerisierbaren Oligomere, d.h. die Anzahl an radikalisch polymerisierbaren Gruppen pro Molekül 1 bis 20, meist 2 bis 15, hauptsächlich 2 bis 6. Die dynamische Viskosität, bestimmt nach DIN 53019-1 aus 2008, bei 25°C ist bevorzugt größer als 1 Pas, besonders bevorzugt jedoch deutlich über 10 Pas. Insbesondere zur Herstellung von guten Haftklebmassen, mit ausreichender Kohäsion eignen sich Oligomere als Bestandteil der Klebmasse mit dynamischen Viskositäten bei 25°C von größer 20 Pas, bevorzugt größer 30 Pas. Im Rahmen der vorliegenden Erfindung wird die dynamische Viskosität dabei gemäß der DIN 53019-1 aus 2008; bei 25 °C, mit einer Schergeschwindigkeit von 1 s⁻¹ bestimmt.

Gemäß besonders bevorzugter Ausführungsformen der Erfindung ist als erste radikalisch polymerisierbare (Meth)acrylat-Verbindung wenigstens ein (Meth)acrylat-haltiges Oligomer auf Basis von aliphatischen Polyurethanen, insbesondere auf Basis von Polyester-Polyurethanen, enthalten, wie beispielsweise das unter dem Handelsnamen EBECRYL^{®} 8402 erhältliche aliphatische Urethandiacrylat.

Hiermit wird eine besonders hohe Lagerungsstabilität erzielt.

Bevorzugte Monomere im Hinblick auf eine hohe Verklebungsfestigkeit sind Acrylsäureester und/oder Methacrylsäureester, in denen der Alkohol-Teil des Esters funktionelle Gruppen und dabei erfindungsgemäß mindestens eine stickstoffhaltige Gruppe enthält.

Beispiele für bevorzugte Monomere als erste radikalisch polymerisierbare (Meth)acrylat-Verbindung sind 2-Methacryloxyethylphenylurethan (MAPU; CAS-Nr.: 51727-47-0), 2-[[(Butylamino)carbonyl]oxy]ethylacrylat (CAS-Nr.: 63225-53-6),

Diurethandimethacrylat (Isomerenmischung) (CAS-Nr.: 72869-86-4).

Gemäß besonders bevorzugter Ausführungsformen der Erfindung ist als erste radikalisch polymerisierbare (Meth)acrylat-Verbindung wenigstens das Monomer 2-Methacryloxyethylphenylurethan (MAPU) enthalten.

Hiermit wird eine besonders hohe Lagerungsstabilität erzielt.

MAPU scheint dabei besonders gut in kleinteiligen Stanzlingen zu funktionieren. Ohne an die Theorie gebunden zu sein wird spekuliert, dass sich diese Monomere positiv auf die durch Luftsauerstoff gegebene Inhibierung auswirken.

Gemäß vorteilhafter Ausführungsformen enthält die Klebemasse wenigstens eine zweite radikalisch polymerisierbare (Meth)acrylat-Verbindung, welche ein Monomer oder Oligomer mit wenigstens einer Hydroxy-Gruppe ist.

Bevorzugt ist als zweite radikalisch polymerisierbare (Meth)acrylat-Verbindung wenigstens ein Monomer oder Oligomer enthalten, welches ausgewählt ist aus der Gruppe bestehend aus Hydroxyethylcaprolactonacrylat (HECLA), 2-Hydroxy-3-phenoxypropylacrylat (HPPA) und 2,3-Dihydroxypropylmethacrylat.

Besonders bevorzugt ist als zweite radikalisch polymerisierbare (Meth)acrylat-Verbindung wenigstens Hydroxyethylcaprolactonacrylat (HECLA) enthalten.

Hiermit wird eine besonders hohe Lagerungsstabilität erzielt.

Die genannten Monomere und Oligomere können gemäß bevorzugter Ausführungsformen auch in Kombination miteinander eingesetzt werden.

Gemäß besonders bevorzugter Ausführungsformen enthält die Klebemasse die reaktiv aushärtbare Klebemasseschicht als erste radikalisch polymerisierbare (Meth)acrylat-Verbindung wenigstens das Monomer 2-Methacryloxyethylphenylurethan (MAPU) und als zweite radikalisch polymerisierbare (Meth)acrylat-Verbindung wenigstens Hydroxyethylcaprolactonacrylat (HECLA).

Hiermit wird eine besonders hohe Lagerstabilität und hohe Verklebungsfestigkeiten erzielt. Gemäß weiterer besonders bevorzugter Ausführungsformen enthält die Klebemasse die reaktiv aushärtbare Klebemasseschicht als erste radikalisch polymerisierbare (Meth)acrylat-Verbindung wenigstens das Monomer 2-Methacryloxyethylphenylurethan (MAPU) und wenigstens ein (Meth)acrylat-haltiges Oligomer auf Basis von aliphatischen Polyurethanen, insbesondere auf Basis von Polyester-Polyurethanen, wie beispielsweise das unter dem Handelsnamen EBECRYL^{®} 8402 erhältliche aliphatische Urethandiacrylat, und als zweite radikalisch polymerisierbare (Meth)acrylat-Verbindung wenigstens Hydroxyethylcaprolactonacrylat (HECLA).

Hiermit wird eine besonders hohe Lagerstabilität und hohe Verklebungsfestigkeiten erzielt.

Gemäß weiterer besonders bevorzugter Ausführungsformen enthält die Klebemasse die reaktiv aushärtbare Klebemasseschicht als erste radikalisch polymerisierbare (Meth)acrylat-Verbindung wenigstens ein (Meth)acrylat-haltiges Oligomer auf Basis von aliphatischen Polyurethanen, insbesondere auf Basis von Polyester-Polyurethanen, wie beispielsweise das unter dem Handelsnamen EBECRYL^{®} 8402 erhältliche aliphatische Urethandiacrylat, und als zweite radikalisch polymerisierbare (Meth)acrylat-Verbindung wenigstens Hydroxyethylcaprolactonacrylat (HECLA).

Hiermit wird eine besonders hohe Lagerstabilität und hohe Verklebungsfestigkeiten erzielt.

Ferner kann die reaktiv aushärtbare Klebemasse weitere radikalisch polymerisierbare Monomere oder Oligomere enthalten.

Bevorzugt ist jedoch keine polymerisierbare (Meth)acrylat-Verbindung, enthalten die eine Amin-Gruppe aufweist. Dies gilt für primäre, sekundäre und tertiäre Amine.

Ferner ist bevorzugt keine Säure enthalten.

Dies bedeutet, dass bei der Herstellung der Klebemasse bevorzugt kein Amin und keine Säure hinzugegeben wird.

Die Reaktivklebemasse des erfindungsgemäßen reaktiven Klebebands enthält bevorzugt 10 Gew.-% bis 50 Gew.-%, besonders bevorzugt 10 bis 40 Gew.-%, der wenigstens einen ersten radikalisch polymerisierbaren (Meth)acrylat-Verbindung.

Für den Fall, dass wenigstens eine zweite radikalisch polymerisierbare (Meth)acrylat-Verbindung enthalten ist, sind hiervon bevorzugt 5 bis 40, besonders bevorzugt 10 bis 38 Gew.-%, wiederum bevorzugt von 13 bis 38 Gew.-%, enthalten.

Die genannten Gewichtsprozentangaben beziehen sich jeweils auf die Gesamtmasse aller ersten bzw. zweiten radikalisch polymerisierbaren (Meth)acrylat-Verbindungen.

Sollten somit zum Beispiel zwei verschiedene erste radikalisch polymerisierbare (Meth)acrylatVerbindungen enthalten sein, beträgt deren Gesamtmasse bevorzugt 10 Gew.-% bis 50 Gew.-%, besonders bevorzugt 10 bis 40 Gew.-%.

Bevorzugt beträgt die Gesamtmasse an in der Klebmasse enthaltenen ersten und zweiten radikalisch polymerisierbaren (Meth)acrylat-Verbindungen 10 bis 65 Gew.-%, besonders bevorzugt 20 bis 62 Gew.-%, ganz besonders bevorzugt 30 bis 62 Gew.-%.

Sofern weitere radikalisch polymerisierbare Monomere oder Oligomere enthalten sind, die nicht als erstes oder zweites Monomer oder Oligomer im Sinne der vorliegenden Erfindung zu verstehen sind, beträgt die Gesamtmasse aller in der Klebemasse enthaltenen radikalisch polymerisierbaren Monomere oder Oligomere bevorzugt ebenfalls 10 bis 65 Gew.-%, besonders bevorzugt 20 bis 62 Gew.-%, ganz besonders bevorzugt 30 bis 62 Gew.-%.

Bevorzugt beträgt in der Reaktivklebemasse des erfindungsgemäßen reaktiven Klebebands das Gewichtsverhältnis der Gesamtheit der Polymere zur Gesamtheit der radikalisch polymerisierbaren Monomere oder Oligomere 3:1 bis 1:3, stärker bevorzugt 2:1 bis 1:2, insbesondere 2:1 bis 1:1.

### c) Initiator und/oder d) Redox-Katalysator

Die Klebemasse enthält c) wenigstens einen Initiator und/oder d) wenigstens einen Redox-Katalysator.

Diese genannten Bestandteile stellen insbesondere ein Initiatorsystem dar, durch welches die Reaktion zur Aushärtung der reaktiv aushärtbaren Klebemasse ausgelöst bzw. aktiviert wird. Je nach Art der Aktivierung sind unterschiedliche Initiatoren und Redox-Katalysatoren geeignet.

Gemäß bevorzugter Ausführungsformen ist das erfindungsgemäße reaktive Klebeband dadurch gekennzeichnet, dass die wenigstens eine reaktiv aushärtbare Klebemasseschicht eine lichthärtende Klebemasseschicht ist und c) wenigstens einen Initiator und d) wenigstens einen Redox-Katalysator enthält, wobei der Redox-Katalysator ein Photoredox-Katalysator ist. Im Rahmen der vorliegenden Erfindung steht der Begriff "Initiator", insbesondere "Radikalinitiator" bzw. radikalbildende Substanz (oder auch Härter), für eine Verbindung, die eine Polymerisationsreaktion oder Vernetzung der Klebemasse einleiten kann. Der Initiator, insbesondere Radikalinitiator, nimmt allerdings zu einem sehr geringen Anteil am Reaktionsgeschehen teil und bildet folglich keinen die Eigenschaften der Verklebung bestimmenden Polymeranteil.

Bevorzugt ist der Initiator ein Radikalinitiator, wobei auch ein Gemisch von zwei oder mehreren Initiatoren denkbar ist. Es können alle im Stand der Technik bekannten Radikalinitiatoren eingesetzt werden. Bevorzugte Radikalinitiatoren sind Peroxide, Hydroperoxide und Azoverbindungen.

Gemäß besonders bevorzugter Ausführungsformen der Erfindung ist der Radikalinitiator ein organisches Peroxid. Besonders bevorzugt sind Hydroperoxide, insbesondere Diisopropylbenzol-hydroperoxid (CAS-Nr. 26762-93-6). Diisopropylbenzol-hydroperoxid wird bevorzugt in Form einer 50 gew.-%igen Lösung von Diisopropylhydroperoxid in Diisopropylbenzol, erhältlich unter dem Handelsnamen Peroxan^{®} IHP-50 eingesetzt. α,α- Dimethylbenzylhydroperoxid, das auch als Cumolhydroperoxid (CAS-Nr. 80-15-9) bekannt ist, kann ebenfalls verwendet werden. Weiterhin können zum Beispiel auch p-Menthanhydroperoxid (CAS-Nr. 26762-92-5), tert.-Amyl-hydroperoxid (CAS-Nr. 3425-61-4) oder 1,1,3,3-Tetramethylbutyl-hydroperoxid (CAS-Nr. 5809-08-5) verwendet werden.

Bevorzugt enthält die Klebemasse 0,1 Gew.-% bis 9 Gew.-%, besonders bevorzugt von 0,1 Gew.-% bis 5 Gew.-%, und besonders bevorzugt von 0,1 Gew.-% bis 2 Gew.-%, an Initiator.

Im Rahmen der vorliegenden Erfindung steht der Begriff "Redox-Katalysator" für eine Verbindung, die den Transfer von Elektronen zwischen chemischen Verbindungen vermitteln kann, die sonst langsamer oder gar nicht reagieren würden.

Im Rahmen der vorliegenden Erfindung steht der Begriff "Photoredox-Katalysator" für eine licht- oder UV-lichtempfindliche Verbindung, die, wenn sie durch Licht oder UV-Licht angeregt wird, den Transfer von Elektronen zwischen chemischen Verbindungen vermitteln kann, die sonst langsamer oder gar nicht reagieren würden. Im Gegensatz zu einem Photoinitiator zerfällt ein Photoredox-Katalysator bei Bestrahlung mit Licht oder UV-Licht nicht in reaktive Spaltprodukte, sondern wird lediglich in einen angeregten Zustand versetzt, der in der Regel relativ langlebig ist und aus dem heraus Redox-Prozesse initiiert oder vermittelt werden können. Der Photoredox-Katalysator löst bevorzugt in der Mischung mit den radikalisch polymerisierbaren Monomeren oder Oligomeren bei Temperaturen bis 90 °C keine Polymerisation aus, auch nicht, wenn die Mischung mit UV- oder Blaulicht bestrahlt wird. Dies gilt, solange der Mischung kein Radikal-Initiator oder ein anderer initiierender Stoff zugesetzt wird. Der Photoredox-Katalysator ist somit kein Initiator oder Radikalinitiator. Bei Bestrahlung mit UV- oder Blaulicht aktiviert er lediglich den Initiator, der dann die Polymerisation auslöst.

Im Rahmen der vorliegenden Erfindung sollen die Begriffe "Redox-Katalysator" und "Photoredox-Katalysator" jedoch nicht darauf beschränkt sein, dass die jeweilige Verbindung im Laufe der Reaktion nicht mit verbraucht wird.

Als Photoredox-Katalysatoren können die dem Fachmann bekannten Photoredox-Katalysatoren eingesetzt werden. Photoredox-Katalysatoren sind häufig Übergangsmetallkomplex, der je nach Liganden neutral oder als Kation vorliegen, mit Ruthenium, Kupfer oder Iridium als Zentralatom. Als Liganden des Übergangmetallkomplexes können bevorzugt zweizähnige Liganden eingesetzt werden, insbesondere solche mit zumindest zwei miteinander verbundenen heteroaromatischen Sechsringen, etwa in Form eines Biphenyls, die ihrerseits Teil eines komplexeren Aufbaus - wie etwa polycyclisch aromatischer Kohlenwasserstoffe und/oder überbrückter - bicyclischer oder polycyclischer - aromatischer Kohlenwasserstoffe - sein können. Werden Biphenyl-Struktureinheiten enthaltende Liganden eingesetzt, kann vorteilhaft jeweils einer der aromatischen Ringe des Biphenyls einen "Zahn" des Liganden bilden, so dass die Zweizähnigkeit gegeben ist. Bicylische aromatische Verbindungen - wie Biphenylverbindungen - oder polycylisch aromatische Verbindungen als Liganden können unsubstituiert sein - also an jedem C-Atom ein Wasserstoffatom tragen - oder ein- oder mehrfach substituiert sein. Der Übergangsmetallkomplex wirkt dabei im Sinne der vorliegenden Erfindung als Photoredox-Katalysator.

Gemäß bevorzugter Ausführungsformen der Erfindung ist der Photoredox-Katalysator ein Übergangsmetallkomplex mit Ruthenium als Zentralatom und Bipyridin oder ein einfach oder mehrfach substituiertes Bipyridin-Derivat als Liganden.

In einer weiteren bevorzugten erfindungsgemäßen Ausführungsform ist der Photoredox-Katalysator ein Übergangsmetallkomplex mit Iridium als Zentralatom und Phenylpyridin oder ein einfach oder mehrfach substituiertes Phenylpyridin-Derivat als Liganden.

Bevorzugt ist damit auch ein erfindungsgemäßes reaktives Klebeband gemäß der vorstehenden Ausführungsformen, welches dadurch gekennzeichnet ist, dass der Photoredox-Katalysator Ruthenium als Zentralatom und Bipyridin oder ein einfach oder mehrfach substituiertes Bipyridin-Derivat als Liganden, oder
Iridium als Zentralatom und Phenylpyridin oder ein einfach oder mehrfach substituiertes Phenylpyridin-Derivat als Liganden, umfasst.

Bevorzugt ist der mindestens eine Photoredox-Katalysator ausgewählt aus der Gruppe bestehend aus Ru(bpm)²⁺ (z.B. Tris(2,2'-bipyrimidine)ruthenium(II) dichlorid), Ru(bpz)₃²⁺ (z.B. Tris(2,2'-bipyrazine)ruthenium Bis(hexafluorophosphat)), Ru(bpy)₃²⁺, Ru(phen)₃²⁺ (z.B.Dichloro tris(1,10-phenanthrolin)ruthenium(II) chlorid), Ir[dF(CF₃)ppy]₂(dtbbpy)⁺ (z.B. [4,4'-*Bis*(1,1-dimethylethyl)-2,2'-bipyridin-*N*1,*N*1'] bis[3,5-difluor-2-[5-(trifluormethyl)-2-pyridin-yl-*N*]phenyl-C]Iridium(III) Hexafluorphosphat), Ir(ppy)₂(dtbbpy)⁺ (z.B. [Ir(dtbbpy)(ppy)₂][PF₆]), jeweils plus ein Anion oder mehrere Anionen (bzw. Gegenion(en) des Kations), wie beispielsweise Chlorid oder Hexafluorophosphat, Ir(Fppy)₃ oder *fac*-Ir(ppy)₃ (*fac*-Tris(2-phenylpyridin)iridium(III)), Ir(ppy)₃, und dem Kupferkomplex Dichloro-(1,10-phenanthrolin)-kupfer(II) (CAS: 14783-09-6).

Gemäß besonders bevorzugter Ausführungsformen der Erfindung ist der Photoredox-Katalysator Tris(2,2'-bipyridyl) ruthenium(II) chlorid Hexahydrat, Ru(bpy)₃Cl₂•6H₂O.

Bevorzugt enthält die Klebemasse bis zu 1 Gew.-%, besonders bevorzugt von 0,01 Gew.-% bis 0,5 Gew.-%, und besonders bevorzugt von 0,01 Gew.-% bis 0,1 Gew.-%, Redox-Katalysator.

### Weitere Additive und/oder Hilfsstoffe

Die Klebemasse kann gegebenenfalls weitere Additive und/oder Hilfsstoffe enthalten, die im Stand der Technik bekannt sind. Der Anteil der weiteren Additive und/oder Hilfsstoffe kann im Bereich von 0 Gew.-% bis etwa 20 Gew.-%, bevorzugt 0 Gew.-% bis etwa 15 Gew.-%, stärker bevorzugt 0 Gew.-% bis etwa 10 Gew.-%, und am stärksten bevorzugt 0 Gew.-% bis etwa 5 Gew.-% liegen.

Als weitere Additive und/oder Hilfsstoffe sind beispielsweise Füllstoffe, Farbstoffe, Keimbildner, rheologische Additive (zum Beispiel pyrogene Kieselsäure), Blähmittel, klebverstärkende Additive (Haftvermittler, insbesondere Silane und Tackifier-Harze), Compoundierungsmittel, Weichmacher und/oder Alterungs-, Licht- und UV-Schutzmittel, zum Beispiel in Form von primären und sekundären Antioxidantien zu nennen.

Insbesondere und gemäß bevorzugter Ausführungsformen beträgt der Anteil an Füllstoffen, wie beispielsweise Glaskugeln oder SiLibeads^{®} 5211, bis zu 50 Gew.-%, insbesondere bis zu 40 Gew.-%.

Gemäß bevorzugter Ausführungsformen enthält die Reaktivklebemasse wenigstens einen rheologie-modifizierenden Füllstoff, wie insbesondere Kieselsäure, und zwar bevorzugt in einer Menge von 1 bis 10 Gew.-%, besonders bevorzugt 2 bis 5 Gew.-%.

### Haftklebrigkeit

Bevorzugt ist die reaktiv aushärtbare Klebemasse der Klebemasseschicht haftklebrig und damit bevorzugt eine Haftklebemasse und die Klebemasseschicht damit bevorzugt eine Haftklebemasseschicht.

Hierdurch wird die Verarbeitbarkeit und die Applikation des Klebebandes erleichtert, insbesondere in den Ausführungsformen, bei denen die Klebemasseschicht als Transferklebeband verwendet wird.

Die Haftklebrigkeit erlaubt vor der Aushärtung eine zuverlässige und sichere Applikation der reaktiven Haftklebebänder am Substrat.

Unter einer Haftklebemasse wird vorliegend erfindungsgemäß, wie allgemein üblich, ein Stoff verstanden, der - insbesondere bei Raumtemperatur - dauerhaft klebrig sowie klebfähig ist. Charakteristisch für eine Haftklebemasse ist, dass sie durch Druck auf ein Substrat aufgebracht werden kann und dort haften bleibt, wobei der aufzuwendende Druck und die Einwirkdauer dieses Drucks nicht näher definiert werden. In manchen Fällen, abhängig von der genauen Art der Haftklebemasse, der Temperatur und der Luftfeuchtigkeit sowie dem Substrat, reicht die Einwirkung eines kurzfristigen, minimalen Drucks, der über eine leichte Berührung für einen kurzen Moment nicht hinausgeht, um den Haftungseffekt zu erzielen, in anderen Fällen kann auch eine längerfristige Einwirkdauer eines hohen Drucks notwendig sein.

Haftklebemassen haben besondere, charakteristische viskoelastische Eigenschaften, die zu der dauerhaften Klebrigkeit und Klebfähigkeit führen. Kennzeichnend für sie ist, dass, wenn sie mechanisch deformiert werden, es sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad der Haftklebemasse als auch von der Geschwindigkeit und Dauer der Deformation sowie von der Temperatur.

Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein gutes Auffließen auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Klebkraft. Stark vernetzte Systeme, kristalline oder glasartig erstarrte Polymere sind mangels fließfähiger Anteile in der Regel nicht oder zumindest nur wenig haftklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Zur genaueren Beschreibung und Quantifizierung des Maßes an elastischem und viskosem Anteil sowie des Verhältnisses der Anteile zueinander können die mittels Dynamisch Mechanischer Analyse (DMA, gemäß DIN EN ISO 6721-1 :2019) ermittelbaren Größen Speichermodul (G') und Verlustmodul (G") herangezogen werden. G' ist ein Maß für den elastischen Anteil, G" ein Maß für den viskosen Anteil eines Stoffes. Beide Größen sind abhängig von der Deformationsfrequenz und der Temperatur.

Die Größen können mit Hilfe eines Rheometers ermittelt werden. Das zu untersuchende Material wird dabei zum Beispiel in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation gegenüber dem Einbringen der Schubspannung gemessen. Dieser zeitliche Versatz wird als Phasenwinkel δ bezeichnet.

Der Speichermodul G' ist wie folgt definiert: G' - (τ/γ) • cos(δ) (τ = Schubspannung, γ = Deformation, δ = Phasenwinkel = Phasenverschiebung zwischen Schubspannungs- und Deformationsvektor).

Die Definition des Verlustmoduls G" lautet: G" = (τ/γ) •sin(δ) (τ - Schubspannung, γ - Deformation, δ = Phasenwinkel = Phasenverschiebung zwischen Schubspannungs- und Deformationsvektor).

Ein Stoff gilt im Allgemeinen als haftklebrig und wird im Sinne der Erfindung als haftklebrig definiert, wenn bei Raumtemperatur, hier definitionsgemäß bei 23°C, im Deformationsfrequenzbereich von 10⁰ bis 10¹ rad/sec G' zumindest zum Teil im Bereich von 10³ bis 10⁷ Pa liegt und wenn G" ebenfalls zumindest zum Teil in diesem Bereich liegt. "Zum Teil" heißt, dass zumindest ein Abschnitt der G'-Kurve innerhalb des Fensters liegt, das durch den Deformationsfrequenzbereich von einschließlich 10° bis einschließlich 10¹ rad/sec (Abszisse) sowie den Bereich der G'-Werte von einschließlich 10³ bis einschließlich 10⁷ Pa (Ordinate) aufgespannt wird. Für G" gilt dies entsprechend.

Bevorzugt weist die Haftklebemasse im Deformationsfrequenzbereich von 10⁰ bis 10¹ rad/sec bei 23 °C einen Speichermodul G' und einen Verlustmoduls G" im Bereich von 10³ bis 10⁷ Pa, bestimmt gemäß DIN EN ISO 6721-1:2019, auf.

Zur Erzielung der viskoelastischen Eigenschaften werden die Monomere, auf denen die der Haftklebemasse zugrundeliegenden Polymere basieren, sowie die gegebenenfalls vorhandenen weiteren Komponenten der Haftklebemasse insbesondere derart gewählt, dass die Haftklebemasse eine Glasübergangstemperatur (nach DIN 53765:1994-03) unterhalb der Anwendungstemperatur (also üblicherweise unterhalb der Raumtemperatur (23 °C)) aufweist. Durch geeignete kohäsionssteigernde Maßnahmen, wie beispielsweise Vernetzungsreaktionen (Ausbildung brückenbildender Verknüpfungen zwischen den Makromolekülen), kann der Temperaturbereich, in dem eine Polymermasse haftklebrige Eigenschaften aufweist, vergrößert und/oder verschoben werden. Der Anwendungsbereich der Haftklebemassen kann somit durch eine Einstellung zwischen Fließfähigkeit und Kohäsion der Masse optimiert werden.

Insbesondere weist eine Haftklebemasse eine Glasübergangstemperatur von ≤ 23 °C, bestimmt gemäß DIN 53765:1994-03, auf.

Zur Vereinfachung definieren die Erfinder, dass ein reaktives Haftklebeband im Sinne der vorliegenden Erfindung bevorzugt eine Klebkraft im unausgehärteten Zustand von wenigstens 1 N/cm besitzt und es nahezu rückstandsfrei entfernt wird (d.h. adhäsives Versagen im Test). Die Klebkraft wird hierbei auf Stahl analog ISO 29862:2007 (Methode 3) bei 23 °C und 50 % relativer Luftfeuchte bei einer Abzugsgeschwindigkeit von 300 mm/min und einem Abzugswinkel von 180° bestimmt. Als Verstärkungsfolie wird eine geätzte PET-Folie mit einer Dicke von 36 µm verwendet, wie sie von der Firma Coveme (Italien) erhältlich ist. Die Verklebung eines 2 cm breiten Messstreifens wird dabei mittels einer Anrollmaschine mit 4 kg bei einer Temperatur von 23 °C vorgenommen. Das Klebeband wird sofort nach der Applikation abgezogen. Der Messwert (in N/cm) ergibt sich als Mittelwert aus drei Einzelmessungen. Kohäsives Versagen in diesem Test zeigen bei Raumtemperatur klebrige Klebstoffe oder Klebebänder, deren Kohäsion nicht ausreichend für ein rückstandfreies Entfernen ist. Solche Klebstoffe oder Klebebänder sind im Sinne der Erfindung keine Haftklebstoffe.

### Reaktives Klebeband-System

Ein weiterer Gegenstand der Erfindung ist ein reaktives Klebeband-System umfassend zumindest ein erstes erfindungsgemäßes reaktives Klebeband umfassend wenigstens eine reaktiv aushärtbare Klebemasseschicht und ein zweites reaktives Klebeband umfassend wenigstens eine reaktiv aushärtbare Klebemasseschicht, wobei die wenigstens eine reaktiv aushärtbare Klebemasseschicht des ersten reaktiven Klebebandes wenigstens einen Initiator und bevorzugt keinen Redox-Katalysator und die wenigstens eine reaktiv aushärtbare Klebemasseschicht des zweiten reaktiven Klebebandes wenigstens einen Redox-Katalysator und bevorzugt keinen Initiator enthält, wobei das zweite reaktive Klebeband bevorzugt ebenfalls ein erfindungsgemäßes Klebeband ist.

Bei dem Initiator des erfindungsgemäßen Klebeband-Systems kann es sich um sämtliche oben genannte Initiatoren handeln, wobei sämtliche obige Ausführungen gelten.

Bevorzugt wird Eisen(II)-phthalocyanin als Redox-Katalysator eingesetzt.

Bei dem erfindungsgemäßen Klebeband-System wird die reaktive Aushärtung durch Inkontaktbringen des ersten erfindungsgemäßen reaktiven Klebebandes und mit dem zweiten erfindungsgemäßen reaktiven Klebeband ausgelöst bzw. aktiviert.

Es versteht sich, dass die reaktiv aushärtbare Klebemasseschicht des ersten reaktiven Klebebandes bei sämtlichen Ausführungsformen des erfindungsgemäßen Klebeband-Systems keinen Redox-Katalysator enthält, der eine vorzeitige Aktivierung in der reaktiv aushärtbaren Klebemasseschicht des ersten reaktiven Klebebandes auslöst.

Ebenso enthält die reaktiv aushärtbare Klebemasseschicht des zweiten reaktiven Klebebandes dabei keinen Initiator, der durch den Redox-Katalysator aktiviert wird und bereits vorzeitig die Aktivierung auslöst.

Ein weiterer Gegenstand der vorliegenden Erfindung ist die Herstellung des erfindungsgemäßen Klebebandes.

Die Klebemasse der Klebemasseschicht und je nach Ausführungsform weitere Klebemassen werden mittels bekannter Verfahren hergestellt und in Schichtform gebracht, insbesondere durch Ausstreichen.

Ferner können ggf. einer oder mehrere Trocknungsschritte erfolgen.

Die Herstellung des erfindungsgemäßen reaktiven Klebebandes erfolgt insbesondere bei Anwesenheit eines Photoredox-Katalysators unter Ausschluss von UV-Licht oder sichtbarem Licht der Wellenlänge, durch die das jeweilige Initiatorsystem, bzw. der jeweilige Photoredox-Katalysator, angeregt wird, insbesondere Violett- und Blaulicht. In der Regel sind dies Wellenlängen von kleiner 500 nm. Der Ausschluss kann in der Regel mit handelsüblichen Gelblichtleuchten sowie durch Abdeckung normaler Lichtquellen, die UV-Anteile und/ oder Violett- und Blaulichtanteile in ihrem Wellenlängenspektrum haben, mit handelsüblichen UV-Schutz- Gelblichtfolien erreicht werden.

Die Klebemasseschicht wird insbesondere durch die nachfolgend beschriebenen Verfahrensschritte hergestellt:
In einem ersten Schritt werden die Inhaltsstoffe (Bestandteile) in einem oder mehreren organischen Lösungsmittel(n) und/oder Wasser gelöst bzw. fein verteilt. Geeignete Lösemittel sind im Stand der Technik bekannt, wobei bevorzugt Lösemittel eingesetzt werden, in denen mindestens einer der Inhaltsstoffe eine gute Löslichkeit aufweist. Besonders bevorzugt sind Aceton und Methylethylketon (MEK).

Wie hierin verwendet, umfasst der Begriff Inhaltsstoff wenigstens a) wenigstens ein Polymer, b) wenigstens eine erste radikalisch polymerisierbare (Meth)acrylat-Verbindung, c) wenigstens einen Initiator, d) wenigstens einen Redox-Katalysator und ggf. weitere Bestandteile, wie rheologie-modifizierende Füllstoffe, wie jeweils oben definiert oder als bevorzugt beschrieben.

Anschließend werden die aufgelösten oder fein verteilten Inhaltsstoffe in einem zweiten Schritt mit üblichen Rührgeräten gemischt. Gegebenenfalls werden die Inhaltsstoffe gleichzeitig aufgelöst, feinverteilt und gemischt.

In einem dritten Schritt wird ein Film, eine Folie, eine Schicht, ein Träger, ein Klebstofffilm, ein Haftklebstofffilm, bevorzugt ein Trennliner oder ein Trennpapier mit der Mischung der aufgelösten, fein verteilten Inhaltsstoffe beschichtet. Die Beschichtung erfolgt nach den üblichen Techniken, die im Stand der Technik bekannt sind.

Nach der Beschichtung wird das Lösemittel in einem vierten Schritt durch Abdampfen entfernt. Dies erfolgt abhängig von den verwendeten Lösemitteln bevorzugt im Temperaturbereich von 60 °C bis 80 °C.

Zur Lagerung wird die entstandene Schicht bzw. das erfindungsgemäße, reaktive Klebeband mit einem Trennliner oder -papier abgedeckt.

Ein weiterer Gegenstand der vorliegenden Erfindung ist ein verklebter Verbund umfassend wenigstens folgende Schichten:
- Ein erstes Substrat A; und
- Ein zweites Substrat B; und
- Ein erfindungsgemäßes reaktives Klebeband oder ein erfindungsgemäßes reaktives Klebeband-Systems, welches zwischen dem Substrat A und dem Substrat B angeordnet ist und die Substrate A und B miteinander verklebt.

Ein weiterer Gegenstand der vorliegenden Erfindung ist die Herstellung eines verklebten Verbundes unter Verwendung des erfindungsgemäßen Klebebandes.

Das erfindungsgemäße Verfahren zur Herstellung eines verklebten Verbundes und damit zur Verklebung zweier Substrate, bevorzugt bei Raumtemperatur, unter Verwendung des erfindungsgemäßen reaktiven Klebebandes umfasst die folgenden Schritte
A) Aufbringen des reaktiven Klebebands auf ein erstes Substrat
B) Aktivierung des reaktiven Klebebands durch Bestrahlung mit UV-Licht oder Blaulicht, wobei Blaulicht insbesondere und beispielsweise eine Wellenlänge von 460 nm aufweist, bevorzugt durch Bestrahlung von einer UV-LED Lampe.
C) Fügen eines zweiten Substrates auf das reaktive Klebeband.

Bei dem erfindungsgemäßen Klebeband kann es sich um sämtliche beschriebenen Ausführungsformen handeln. In jedem Fall umfasst das erfindungsgemäße Klebeband wenigstens eine reaktiv aushärtbare Klebemasseschicht, welche bei dem Verfahren zur Herstellung eines verklebten Verbundes gemäß Schritt B) aktiviert wird.

Die Aktivierung gemäß Schritt B) kann dabei zeitlich vor dem Schritt A) erfolgen oder im Anschluss daran.

Bevorzugt erfolgt die Aktivierung gemäß Schritt B) zeitlich vor dem Schritt C), insbesondere wenn eine Aktivierung durch das erste und zweite Substrat hindurch nicht möglich ist.

Bevorzugt wird in diesem Verfahren, insbesondere bei der Durchführung im industriellen Maßstab, mit einer Wellenlänge von 365 nm oder 385 nm, bevorzugter mit 365 nm, bestrahlt.

Ebenso bevorzugt kann die Bestrahlung auch mit einer 460 nm LED-Strahlungsquelle erfolgen. Die Ergebnisse, die mittels Bestrahlung mit 460 nm-Licht erzielt werden, sind repräsentativ für die Bestrahlung mit Licht einer Wellenlänge von 365 nm oder 385 nm.

Der Fachmann wird die zeitliche Reihenfolge der Schritte auch in diesem Fall auf die jeweiligen Substrate und Beschaffenheit und Konstruktion des jeweiligen Klebebandes anpassen. Erfindungsgemäß ist auch ein Verfahren zur Herstellung eines verklebten Verbundes und damit zur Verklebung zweier Substrate, bevorzugt bei Raumtemperatur, unter Verwendung des erfindungsgemäßen reaktiven Klebeband-Systems umfasst die folgenden Schritte:
X1) Bereitstellen eines ersten erfindungsgemäßen Klebebandes, welches in der reaktiv aushärtbaren Klebemasseschicht wenigstens einen Initiator enthält; und
X2) Bereitstellen eines zweiten erfindungsgemäßen Klebebandes, welches in der reaktiv aushärtbaren Klebemasseschicht wenigstens einen Redox-Katalysator enthält; und
X3) Bereitstellen eines ersten Substrates; und
X4) Bereitstellen eines zweiten Substrates; und
X5) Aufbringen des ersten erfindungsgemäßen Klebebandes auf das erste Substrat; und
X6) Aufbringen des zweiten erfindungsgemäßen Klebebandes auf das zweite Substrat; und
X7) Inkontaktbringen des ersten erfindungsgemäßen Klebebandes mit dem zweiten erfindungsgemäßen Klebeband.

Die Schritte X1) bis X7) können in beliebiger Reihenfolge durchgeführt werden, sodass das Inkontaktbringen der beiden Klebebänder nach dem Aufbringen auf das jeweilige Substrat oder vorher erfolgen kann.

Der Fachmann wird die zeitliche Reihenfolge der Schritte auch in diesem Fall auf die jeweiligen Substrate und Beschaffenheit und Konstruktion der jeweiligen Klebebänder anpassen.

Das erfindungsgemäße Klebeband stellt insbesondere ein doppelseitiges Klebeband dar, und dabei bevorzugt ein Transferklebeband dar.

Vorteilhaft können die äußeren, frei liegenden Flächen der Klebemasseschichten des erfindungsgemäßen Klebebandes mit antiadhäsiven Materialien ausgerüstet sein wie mit einem Trennpapier oder einer Trennfolie, auch Liner genannt. Bei einem Liner kann es sich auch um mindestens einseitig, vorzugsweise beidseitig, antiadhäsiv beschichtetes Material handeln, wie beispielsweise beidseitig silikonisiertes Material. Ein Liner, bzw. allgemeiner formuliert, ein temporärer Träger, ist nicht Bestandteil eines Klebebands, sondern nur ein Hilfsmittel zu dessen Herstellung, Lagerung und/oder für die Weiterverarbeitung durch Stanzen. Darüber hinaus ist ein Liner im Gegensatz zu einem permanenten Träger nicht fest mit einer Klebstoffschicht verbunden, sondern fungiert vielmehr als temporärer Träger, d.h. als Träger, der von der Klebstoffschicht abziehbar ist. "Permanente Träger" werden in der vorliegenden Anmeldung synonym auch einfach "Träger" genannt.

Die Dicke der einzelnen Klebemasseschicht(en) (in z-Richtung) beträgt bevorzugt von 10 bis 300 µm, besonders bevorzugt 15 bis 150 µm, ganz besonders bevorzugt von 20 bis 100 µm, ganz besonders bevorzugt von 25 bis 70 µm.

Ein weiterer Gegenstand der vorliegenden Erfindung ist die Verwendung des erfindungsgemäßen Klebebands oder des erfindungsgemäßen Klebeband-Systems zur Verklebung von Bauteilen in elektronischen, optischen oder feinmechanischen Geräten, Automobilen, medizinischen Geräten und zahnmedizinischen Geräten.

Bevorzugt ist die Verwendung des erfindungsgemäßen reaktiven Klebebandes oder Klebeband-Systems zur Herstellung von Verklebungen auf Materialien ausgewählt aus Kunststoff, Metall, Glas oder Keramik und die Verwendung des erfindungsgemäßen reaktiven Klebebandes oder Klebeband-Systems als Klebemittel in der Herstellung elektronischer, optischer oder feinmechanischer Geräte.

Derartige portable Geräte sind insbesondere:
Fotoapparate, Digitalkameras, Fotografie-Zubehörgeräte (wie Belichtungsmesser, Blitzlichtgeräte, Blenden, Fotogehäuse, Objektive etc.), Filmkameras, Videokameras Kleincomputer (Mobilcomputer, Taschencomputer, Taschenrechner), Laptops, Notebooks, Netbooks, Ultrabooks, Tablet-Computer, Handhelds, elektronische Terminkalender und Organisatoren (sogenannte "Electronic Organizer" oder "Personal Digital Assistants", PDA, Palmtops), Modems;
Computer-Zubehörgeräte und Bedieneinheiten für elektronische Geräte, wie Mäuse, Zeichenpads, Grafiktabletts, Mikrophone, Lautsprecher, Spielkonsolen, Gamepads, Fernsteuerungen, Fernbedienungen, Tastfelder ("Touchpads");
Monitore, Displays, Bildschirme, berührungsempfindliche Bildschirme (Sensorbildschirme, "Touchscreen-Geräte"), Beamer;
Lesegeräte für elektronische Bücher ("E-Books");
Kleinfernsehgeräte, Taschenfernseher, Filmabspielgeräte, Videoabspielgeräte Radios (auch Klein- und Taschenrundfunkgeräte), Walkmen, Discmen, Musikabspielgeräte für zum Beispiel CD, DVD, Blue-Ray, Kassetten, USB, MP3, Kopfhörer Schnurlose Telefone, Mobiltelefone, Smartphones, Funksprechgeräte, Freisprechgeräte, Personenrufgeräte (Pager, Pieper);
Mobile Defibrillatoren, Blutzuckermessgeräte, Blutdruckmessgeräte, Schrittzähler, Pulsmesser;
Taschenlampen, Laserpointer;
Mobile Detektoren, optische Vergrößerungsgeräte, Fernsichtgeräte, Nachtsichtgeräte, GPS-Geräte, Navigationsgeräte, tragbare Schnittstellengeräte der Satellitenkommunikation;
Datenspeichergeräte (USB-Sticks, externe Festplatten, Speicherkarten); und Armbanduhren, Digitaluhren, Taschenuhren, Kettenuhren, Stoppuhren.

Im Folgenden werden einige Beispiele beschrieben, um die Erfindung weiter zu verdeutlichen.

### Methodenteil - Prüfmethoden

Alle Messungen werden, sofern nichts anderes angegeben ist, bei 23 °C und 50 % relativer Luftfeuchtigkeit durchgeführt.

### Schmelzpunkt Tₘ

Die Bestimmung des Schmelzpunktes erfolgt auf einer Wärmplatte. Die Substanz wird auf einen Objektträger gelegt und mit einem optischen Mikroskop beobachtet, während die Temperatur mit einer Erwärmungsrate von 10 K/min erhöht wird. Der Schmelzpunkt ist die Temperatur, an der die Kristalle anfangen flüssig zu werden.

### Molekulargewicht Mₙ, M_{w}

Die Angaben des zahlenmittleren Molekulargewichts Mₙ bzw. gewichtsmittleren Molekulargewichts M_{w} in dieser Schrift beziehen sich auf die Bestimmung per Gelpermeationschromatographie (GPC). Die Bestimmung erfolgt an 100 µl klarfiltrierter Probe (Probenkonzentration 4 g/l). Als Eluent wird Tetrahydrofuran mit 0,1 Vol.-% Trifluoressigsäure eingesetzt. Die Messung erfolgt bei 25 °C. Als Vorsäule wird eine Säule Typ PSS-SDV, 5 µm, 10³ Ä, 8,0 mm * 50 mm (Angaben hier und im Folgenden in der Reihenfolge: Typ, Partikelgrösse, Porosität, Innendurchmesser * Länge; 1 Ä = 10⁻¹⁰ m) verwendet. Zur Auftrennung wird eine Kombination der Säulen des Typs PSS-SDV, 5 µm, 10³ Ä sowie 10⁵ Ä und 10⁶ Ä mit jeweils 8,0 mm * 300 mm eingesetzt (Säulen der Firma Polymer Standards Service; Detektion mittels Differentialrefraktometer Shodex RI71). Die Durchflussmenge beträgt 1,0 ml pro Minute. Die Kalibrierung wird mittels des kommerziell verfügbaren ReadyCal-Kits Poly(styrene) der Firma Agilent Technologies Inc. Durchgeführt, so dass die Angabe der Daten in Polystyrol-Massenäquivalenten erfolgt..

### Dicke

Die Dicke einer Klebemasseschicht kann durch Bestimmung der Dicke eines bezüglich seiner Länge und seiner Breite definierten Abschnitts einer solchen auf einen Liner aufgetragenen Klebemassenschicht bestimmt werden, abzüglich der (bekannten oder separat ermittelbaren) Dicke eines Abschnitts gleicher Dimensionen des verwendeten Liners. Die Dicke der Klebemasseschicht lässt sich über handelsübliche Dickenmessgeräte (Taster-Prüfgeräte) mit Genauigkeiten von weniger als 1 µm Abweichung ermitteln. Sofern Dickenschwankungen festgestellt werden, wird der Mittelwert von Messungen an mindestens drei repräsentativen Stellen angegeben, also insbesondere nicht gemessen an Kniffen, Falten, Stippen und dergleichen.

Wie bereits die Dicke einer Klebemasseschicht lässt sich auch die Dicke eines Klebebands (Klebestreifens) bzw. eines Trägers analog über handelsübliche Dickenmessgeräte (Taster-Prüfgeräte) mit Genauigkeiten von weniger als 1 µm Abweichung ermitteln. Sofern Dickenschwankungen festgestellt werden, wird der Mittelwert von Messungen an mindestens drei repräsentativen Stellen angegeben, also insbesondere nicht gemessen an Kniffen, Falten, Stippen und dergleichen.

### Push-Out Stahl (SUS-SUS) - initial (Verklebungsfestigkeit)

Der Push-Out-Test ermöglicht Aussagen über die Verklebungsfestigkeit eines Klebeprodukts in Richtung der Klebschichtnormalen. Bereitgestellt werden ein kreisförmiges erstes Substrat (1) (SUS, VA-1.4301 Stahl (einseitig spiegelpoliert), Dicke 3 mm) mit Durchmesser 21 mm, ein quadratisches zweites Substrat (2) (SUS, VA-1.4301 Stahl (einseitig spiegelpoliert), Dicke 2 mm) mit 40 mm Seitenlänge - mit einer kreisförmigen, zentral angeordneten Öffnung (Bohrung) von 9 mm Durchmesser, sowie die zu untersuchenden Klebebandprobe, die ringförmig mit einem Außendurchmesser von 18 mm und einem Innendurchmesser von 13 mm gestanzt wurde, so dass ein Ring mit einer Stegbreite von 5 mm entstand.

Aus den vorgenannten drei Bauteilen wird ein Prüfkörper hergestellt, indem das Klebeprodukt mit einer freien Oberfläche mittig auf das Substrat (1) verklebt wird. Dann wird die temporäre Schutzfolie (silikonisierter PET-Liner) entfernt und mit mindestens 50 J/cm² mit einer Blaulicht LED (LED Spot 100 HP IC 460 nm der Hönle AG) bestrahlt. Die Aktivierung kann stattdessen auch mit einer 365 nm UV-LED (Hönle AG) erfolgen.

Dieser Verbund wird mit der nun freiliegenden Seite des Klebeproduktes innerhalb von 2 Minuten auf das Substrat (2) konzentrisch appliziert, also derart, dass die kreisrunde Aussparung des Substrats (2) genau mittig über dem kreisrunden ersten Substrat 1 angeordnet ist (Verklebungsfläche ist somit 151 mm²) und mit einem Druck von mindestens 3 bar für mindestens 30 Sekunden verpresst, wobei der Prüfkörper entsteht.

Nach dem Verpressen werden die Prüfkörper für 72 Stunden bei 23 °C / 50 % relativer Feuchte (r.F.) konditioniert. Nach der Lagerung wird der Klebeverbund in eine Probenhalterung gespannt, so dass der Verbund waagerecht ausgerichtet ist. Der Prüfkörper wird mit der Scheibe (Substrat (1)) nach unten in die Probenhalterung eingelegt und in einer Vorrichtung (Zwick) die Verklebungsfestigkeit gemessen. Dazu wird ein Stahlstempel mit einem Durchmesser von 7 mm durch die kreisförmige Öffnung in Substrat (2) gefahren und die Kraft bestimmt, die benötigt wird das kreisförmige Substrat (1) vom quadratischen Substrat (2) zu trennen. Als Ausgabewert wird die bestimmte Kraft durch die Verklebungsfläche geteilt und die Kraft in MPa angegeben.

Es werden drei Proben pro Produkt getestet und der Mittelwert als Kennzahl für die Verklebungsfestigkeit angegeben.

### Push-Out Stahl (SUS-SUS) - 4W@40°C

Ferner wurden Klebemassestanzlinge der erfindungsgemäßen Beispiele vor dem Aushärten für 4 Wochen lichtgeschützt bei einer Temperatur von 40 °C gelagert. Anschließend wurden Proben präpariert und der Push-Out als Maß für die "Verklebungsfestigkeit nach Lagerung" und somit als Maß für die Lagerungsstabilität von gestanzten Klebeprodukten (die-cuts) gemäß obiger Beschreibung ermittelt.

### DSC

Die Dynamische Differenzkalorimetrie (DSC; englisch Differential Scanning Calorimetry) an einem DSC 204 F1 der Firma Netzsch durchgeführt. Die Probe wird in verstärkte Aluminium-Tiegel (Deckel manuell gelocht) eingewogen. Das Temperaturprogramm fährt zwei Aufheizrampen, zuerst wird von 25 °C auf -100 °C mit flüssigem Stickstoff heruntergekühlt und mit 10 K/min auf 180 °C aufgeheizt.

**Tabelle 1: Eingesetzte Chemikalien**

| | |
|---|---|
| 2-Phenoxyethylacrylat (PEA) | CAS Nr. 48145-04-6, Monomer Poly(meth)acrylat, BASF |
| Methylmethacrylat (MMA) | CAS Nr. 80-62-6, Monomer Poly(meth)acrylat, Sigma-Aldrich |
| Vazo^{®} 67 | CAS Nr. 13472-08-7, 2,2'-Azobis(2-methylbutryro-nitril), Polymerisationsinitiator, Akzo Nobel |
| Di(4-tert-5-butylcyclohexyl)peroxy-dicarbonat | CAS Nr. 15520-11-3, Polymerisationsinitiator, Akzo Nobel |
| Levamelt^{®} 700 PE | Ethylen-Vinylacetat-Copolymer, 70 % Vinylacetatanteil, Arlanxeo |
| Polyvinylacetat | CAS: 9003-20-7, Sigma Aldrich |
| Desmomelt^{®} 530 | Weitgehend lineares, stark kristallisierendes Polyurethan-Elastomer, Covestro |
| MAPU | 2-Methacryloxyethyl Phenyl Urethane, CAS: 51727-47-0, Cymer, M = 249,3 g/mol, Feststoff bei 21 °C, Tₘ = 50 °C |
| HECLA | Hydroxyethylcaprolactone Acrylate (Oligomer), CAS: 110489-05-9, BASF |
| ACMO | 4-Acryloylmorpholin, CAS: 5117-12-4; M = 141 g/mol, flüssig |
| IPGA | Isopropyliden Glycerol Acrylat, CAS: 13188-82-4, M = 186,2 g/mol, flüssig |
| NK-Ester CB1 | β-Methacryloyloxyethyl hydrogen phthalate (Mono-2-(methacryloyloxy)ethyl Phthalate) CAS: 27697-00-3, M = 278,3 g/mol, flüssig, Fa. Kowa |
| Visiomer DMAPMA | *N-*[3-(Dimethylamino)propyl]methacrylamid, CAS: 5205-93-6, M = 170 g/mol, flüssig, Evonik |
| Ebecryl^{®} 8402 | Aliphatisches Polyester Urethandiacrylat Oligomer, M_{w} = 1770 g/mol, Allnex |
| Peroxan^{®} IHP-50 | 50 gewichtsprozentige Lösung von Diisopropylhydroperoxid (CAS-Nr.: 26762-93-6) in Diisopropylbenzol, Radikalinitiator, Pergan GmbH |
| Ru(bpy)₃ Cl₂ / Tris(2,2'-bipyridyl) ruthenium(II)chlorid | als Hexahdyrat; Tris(2,2'-bipyridyl) ruthenium(II) chlorid Hexahydrat, Ru(bpy)sCl₂•6H₂O; CAS-Nr.: 50525-27-4, Photoredox-Katalysator, Chemos GmbH |
| Aerosil^{®} R202 | CAS-Nr.: 7631-86-9, hydrophobierte pyrogene Kieselsäure, Evonik AG |
| Polymer P1 | Polymethacrylat, hergestellt wie beschrieben |

### Herstellung Polymer P1

Ein für radikalische Polymerisationen konventioneller 4 L-Reaktor wurde mit 320 g einer Mischung aus 69 Gew.-% 2-Phenoxyethylacrylat und 31 Gew.-% Methylmethacrylat sowie 273 g Ethylacetat/Isopropanol (96/04) befüllt. Nach 45-minütiger Durchleitung von Stickstoffgas unter Rühren wurde der Reaktor auf 58 °C hochgeheizt und 0,2 g Vazo^{®} 67 (2,2'-Azobis(2-methylbutryronitril)) hinzugegeben. Weitere 480 g der oben beschriebenen Monomermischung und 377 g Ethylacetat wurden 2 Stunden lang kontinuierlich zugegeben. Anschließend wurde das äußere Heizbad auf 65 °C erwärmt und die Reaktion konstant bei dieser Außentemperatur durchgeführt. Nach 1 h und nach 1,5 h Reaktionszeit wurden jeweils 0,3g und 0,3g 2,2'-Azobis(2-methylbutryonitril) hinzugegeben. Zur Reduktion der Restmonomeren wurden nach 6 h und nach 7,5 h jeweils 0,12 g Di(4-tert-5-butylcyclohexyl)peroxydicarbonat hinzugegeben. Es wurde einmal nach 2 h und 4 h mit 160 g Ethyl Acetat verdünnt. Die Reaktion wurde nach 24 h Reaktionszeit abgebrochen und auf Raumtemperatur abgekühlt.

### Herstellung der Reaktivklebemassen

### Wässrige Photoredoxkatalysator-Lösung

Unter Gelblicht wurden 5 g Tris(2,2'-bipyridyl)ruthenium(II)chlorid Hexahydrat und 95 g voll entsalztes Wasser in ein braunes Schraubglas eingewogen. Das Schraubglas wurde verschlossen. Durch 8 Stunden Rollen des Schraubglases auf einer Rollbank wurde das Tris(2,2'-bipyridyl)ruthenium(II)chlorid Hexahydrat vollständig in Lösung gebracht.

### Reaktivklebemasse

Die Herstellung der Basismassen der Reaktivklebemassen erfolgte im Labor gemäß den prozentualen Mengenanteilen in der untenstehenden Tabelle 2. Zu den hergestellten, in Lösungsmittel vorliegenden Polymeren wurden die weiteren Rohstoffe zugegeben und im Anschluss daran wurde die wässrige Photoredoxkatalysator-Lösung mittels Rührens zugegeben. Wurden kommerzielle Polymere eingesetzt, so wurden diese als 40%-ige Lösung in Lösungsmittel angesetzt. Die Menge an Lösungsmittel ist in Tabelle 2 jedoch nicht mitangegeben.

**Tabelle 2**

| | **E1** | **E2** | **E3** | **E4** | **E5** | **E6** | **E7** | **E8** | **V1** | **V2** | **V3** | **V4** |
|---|---|---|---|---|---|---|---|---|---|---|---|---|
| P1 | 56,37 | 54,97 | - | - | - | 32,87 | 61,07 | 39,97 | 54,97 | 54,97 | 54,97 | 54,97 |
| Polyvinylacetat | - | - | - | 59,97 | - | - | - | - | - | - | - | - |
| Levamelt 700 | - | - | 41,97 | - | - | - | - | - | - | - | - | - |
| Desmomelt530 | - | - | - | - | 54,97 | - | - | - | - | - | - | - |
| MAPU | - | 15,5 | 21 | 14 | 24 | - | - | 15,5 | - | - | - | - |
| HECLA | - | 23,2 | 32 | 21 | 16 | 37,6 | 21,9 | 23,2 | - | - | - | - |
| ACMO | - | - | - | - | - | - | - | - | 38,7 | - | - | - |
| IPGA | - | - | - | - | - | - | - | - | - | 38,7 | - | - |
| NK-Ester CB1 | - | - | - | - | - | - | - | - | - | - | 38,7 | - |
| DMAPMA | - | - | - | - | - | - | - | - | - | - | - | 38,7 |
| Ebecryl 8402 | 37,6 | - | - | - | - | 23,5 | 11 | 15 | - | - | - | - |
| Aerosil R 202 | 3,6 | 3,8 | 3,8 | 3,8 | 3,8 | 3,6 | 3,6 | 3,8 | 3,8 | 3,8 | 3,8 | 3,8 |
| IHP-50 | 2,4 | 2,5 | 1,2 | 1,2 | 1,2 | 2,4 | 2,4 | 2,5 | 2,5 | 2,5 | 2,5 | 2,5 |
| Ru-complex | 0,03 | 0,03 | 0,03 | 0,03 | 0,03 | 0,03 | 0,03 | 0,03 | 0,03 | 0,03 | 0,03 | 0,03 |

Die Klebmassen wurden final mit Aceton auf einen Feststoffgehalt von 34% eingestellt.

### Herstellung der reaktiven Haftklebebänder

Zur Herstellung der reaktiven Klebemasseschichten, also der trägerlosen Transferhaftklebebänder, wurden die verschiedenen reaktiven Klebemassen aus einer Lösung auf einen konventionellen Liner (silikonisierte Polyesterfolie) mittels eines Laborstreichgeräts aufgebracht und getrocknet. Die Größe der Klebemassenschicht betrug ungefähr 21 cm x 30 cm und die Klebmassenschichtdicke nach dem Trocknen betrug 100 ± 5 µm. Die Trocknung erfolgte jeweils zunächst bei RT für 15 Minuten und 15 Minuten bei 120 °C in einem Labortrockenschrank. Die getrockneten Klebemasseschichten wurden jeweils unverzüglich nach dem Trocknen mit einem zweiten Liner (silikonisierte Polyesterfolie mit geringerer Trennkraft) auf der offenen Seite laminiert.

Es wurden entsprechende Klebebänder aus den Klebemassen hergestellt.

Die Verklebungsfestigkeiten der Vergleichsklebebänder sowie der erfindungsgemäßen Klebebänder wurden gemäß der oben angegebenen Methode bestimmt, wobei während der Probenpräparation wie bei der Methodenbeschreibung zur Verklebungsfestigkeit angegeben mittels Bestrahlung aktiviert wird.

Die Ergebnisse sind in Tabelle 3 und ergänzend wie folgt zusammengefasst.

Die erfindungsgemäßen Beispiele E1 bis E8 und V1 zeigen haftklebrige Klebmassen, die unabhängig vom verwendeten polymeren Filmbildner (Polyacrylat, Polyvinylacetat, Ethylen-Vinylacetat-Copolymer, Polyurethan) zu hohen Verklebungsfestigkeiten von mehr als 3,5 MPa im Push-out Test (initial) auf Stahl führen.

In E1, E6 und E7 ist erfindungsgemäß ein Urethan-Acrylat-Oligomer enthalten, während in E2 bis E5 das Urethan-haltige Monomer MAPU enthalten ist. In E8 sind sowohl das Oligomer als auch MAPU enthalten.

Bei den Beispielen E2 bis E8 ist zudem in Kombination mit dem ersten stickstoffhaltigen Monomer als zweites Hydroxy-haltiges Oligomer HECLA enthalten.

Im Gegensatz zu V1 erzielen E1 bis E8 auch nach Lagerung bei 40°C für 4 Wochen noch zu den Frischwerten vergleichbare Werte. Monomere, die zwar eine erfindungsgemäße stickstoffhaltige Gruppe tragen, wie zum Beispiel N-Vinylcaprolactam oder das in V1 enthaltene 4-Acryloylmorpholin, lassen sich zwar polymerisieren, jedoch ist die Lagerfähigkeit nicht gegeben, da sie über die Zeit vor allen Dingen aus schmalen Stanzlingen zu verdampfen scheinen.

V2 enthält mit IPGA ein Monomer ohne Stickstoffgruppe. Es erfolgt keine Aushärtung nach Bestrahlung. Auch V3 enthält kein Monomer mit wenigstens einer stickstoffhaltigen Gruppe, was sich bereits an dem sehr niedrigen Push-Out auf Stahl zeigt. Hier wurde eine DSC-Analyse nach der Aushärtung durchgeführt. Dieses Klebeband zeigte im DSC eine Restreaktivität von fast 70%, war also offensichtlich nicht ausreagiert. Werden nicht erfindungsgemäß enthaltene stickstoffhaltige Gruppen tragende Monomere verwendet, wie in V4 eine tertiäre Aminogruppe, so ist die Lagerfähigkeit überhaupt nicht gegeben und die Klebemasse beginnt bereits im Trocknungsschritt bei der Herstellung auszuhärten.

**Tabelle 3**

| | **E1** | **E2** | **E3** | **E4** | **E5** | **E6** | **E7** | **E8** | **V1** | **V2** | **V3** | **V4** |
|---|---|---|---|---|---|---|---|---|---|---|---|---|
| Push-out Stahl initial [MPa] | 7,6 | 8,0 | 4,2 | 4,2 | 7,9 | 11,3 | 9,8 | 12,3 | 5,4 | 0,64 | 0,81 | 0,32 |
| Push-out Stahl nach 4W@40°C | 7,4 | 8,3 | 4,8 | 4,5 | 7,7 | 11,0 | 10,2 | 12,5 | 0,9 | n. m. | n. b. | n. b. |

| | | | | | | | | | | | | |
|---|---|---|---|---|---|---|---|---|---|---|---|---|
| n. m. = nicht messbar n. b. = nicht bestimmt | | | | | | | | | | | | |

## Patentansprüche

1. Reaktives Klebeband, umfassend wenigstens eine reaktiv aushärtbare Klebemasseschicht enthaltend
a) wenigstens ein Polymer, und
b) wenigstens eine erste radikalisch polymerisierbare (Meth)acrylat-Verbindung, und
c) wenigstens einen Initiator und/oder
d) wenigstens einen Redox-Katalysator,
**dadurch gekennzeichnet, dass** die wenigstens eine erste radikalisch polymerisierbare (Meth)acrylat-Verbindung ein Monomer oder Oligomer mit mindestens einer stickstoffhaltigen Gruppe ausgewählt aus Amid, Urethan und Harnstoff ist und die wenigstens eine erste radikalisch polymerisierbare (Meth)acrylat-Verbindung einen Schmelzpunkt von größer als 45 °C und/oder ein Molekulargewicht von mehr als 300 g/mol aufweist.

2. Reaktives Klebeband nach Anspruch 1, **dadurch gekennzeichnet, dass** als erste radikalisch polymerisierbare (Meth)acrylat-Verbindung wenigstens das Monomer 2-Methacryloxyethylphenylurethan (MAPU) enthalten ist.

3. Reaktives Klebeband nach Anspruch 1 oder 2, **dadurch gekennzeichnet, dass** als erste radikalisch polymerisierbare (Meth)acrylat-Verbindung wenigstens ein (Meth)acrylat-haltiges Oligomer auf Basis von aliphatischen Polyurethanen, insbesondere auf Basis von Polyester-Polyurethanen, enthalten ist.

4. Reaktives Klebeband nach einem der vorherigen Ansprüche, **dadurch gekennzeichnet, dass** die reaktiv aushärtbare Klebemasseschicht wenigstens eine zweite radikalisch polymerisierbare (Meth)acrylat-Verbindung enthält, welche ein Monomer oder Oligomer mit wenigstens einer Hydroxy-Gruppe ist.

5. Reaktives Klebeband nach Anspruch 4, **dadurch gekennzeichnet, dass** als zweite radikalisch polymerisierbare (Meth)acrylat-Verbindung wenigstens ein Monomer oder Oligomer enthalten ist, welches ausgewählt ist aus der Gruppe bestehend aus Hydroxyethylcaprolactonacrylat (HECLA), 2-Hydroxy-3-phenoxypropylacrylat (HPPA) und 2,3-Dihydroxypropylmethacrylat.

6. Reaktives Klebeband nach einem der vorhergehenden Ansprüche, **dadurch gekennzeichnet, dass** die reaktiv aushärtbare Klebemasseschicht als erste radikalisch polymerisierbare (Meth)acrylat-Verbindung wenigstens das Monomer 2-Methacryloxyethylphenylurethan (MAPU) und als zweite radikalisch polymerisierbare (Meth)acrylat-Verbindung wenigstens Hydroxyethylcaprolactonacrylat (HECLA) enthält.

7. Reaktives Klebeband nach einem der vorhergehenden Ansprüche, **dadurch gekennzeichnet, dass** das Polymer ausgewählt ist aus der Gruppe bestehend aus Ethylen-Vinylacetat-Copolymeren (EVA), Poly(meth)acrylaten, Polyurethanen (PU), Polyvinylacetaten (PVA), Polyvinylalkoholen, Polyvinylacetalen, wie insbesondere Polyvinylbutyral (PVB), Polyestern und Polymeren aus Monomeren umfassend N-Vinylverbindungen, wobei das Polymer besonders bevorzugt ausgewählt ist aus der Gruppe bestehend aus Ethylen-Vinylacetat-Copolymeren (EVA), Polyvinylacetaten (PVA), Poly(meth)acrylaten, Poly(N-Vinylcaprolactam), Poly(N-Vinylpyrrolidon) und Polyurethanen (PU).

8. Reaktives Klebeband nach einem der vorhergehenden Ansprüche, **dadurch gekennzeichnet, dass** die erste radikalisch polymerisierbare (Meth)acrylat-Verbindung einen Schmelzpunkt von mindestes 50 °C, besonders bevorzugt von mindestens 55 °C, und/oder ein Molekulargewicht von mehr als 400 g/mol, ganz besonders bevorzugt von mehr als 500 g/mol, aufweist.

9. Reaktives Klebeband nach einem der Ansprüche 1 bis 8, **dadurch gekennzeichnet, dass** die wenigstens eine reaktiv aushärtbare Klebemasseschicht eine lichthärtende Klebemasseschicht ist und c) wenigstens einen Initiator und d) wenigstens einen Redox-Katalysator enthält, wobei der Redox-Katalysator ein Photoredox-Katalysator ist.

10. Reaktives Klebeband nach Anspruch 9, **dadurch gekennzeichnet, dass** der Photoredox-Katalysator Ruthenium als Zentralatom und Bipyridin oder ein einfach oder mehrfach substituiertes Bipyridin-Derivat als Liganden, oder Iridium als Zentralatom und Phenylpyridin oder ein einfach oder mehrfach substituiertes Phenylpyridin-Derivat als Liganden, umfasst.

11. Verwendung des Klebebands gemäß einem der Ansprüche 1 bis 10 zur Verklebung von Bauteilen in elektronischen, optischen oder feinmechanischen Geräten, Automobilen, medizinischen Geräten und zahnmedizinischen Geräten.
